# EUROPEAN PATENT APPLICATION

(11) **EP 2 827 086 A1**
(43) Date of publication of application: **21.01.2015**
(21) Application number: 13760853.5
(22) Date of filing: 17.01.2013
(51) Int. Cl.: F25D 29/00, F25D 11/00, F25D 23/02, G06K 17/00, G06K 19/00

(54) **REFRIGERATOR AND HOUSEHOLD ELECTRICAL APPLIANCE SERVICE SYSTEM USING SAME**

(30) Priority: 13.03.2012 JP 2012055559; 13.03.2012 JP 2012055560; 13.03.2012 JP 2012055561
(71) Applicant: Panasonic Corporation, Kadoma-shi, Osaka 571-8501 (JP)
(72) Inventor: KIMURA, Yoshito, Osaka 540-6207 (JP); SATO, Fumiaki, Osaka 540-6207 (JP); UENO, Osamu, Osaka 540-6207 (JP); AZUMA, Yu, Osaka 540-6207 (JP); KOMEDA, Takafumi, Osaka 540-6207 (JP)
(74) Representative: Eisenführ Speiser
(86) International application number: PCT/JP2013/000182
(87) International publication number: WO 2013/136647

(57) **Abstract**

A refrigerator includes refrigerator body (1) having a plurality of storage rooms, a plurality of doors that open and close the plurality of storage rooms, and RFID tag (21) that performs proximity communication. In addition, RFID tag (21) is provided on the uppermost door among a plurality of doors. In this way, a specific communication failure of refrigerator (100) or dirt on mobile terminal (22) which easily occurs due to the spilling of water or dirt at the time of taking food in and out of the refrigerator can be prevented, and thus, it is possible to provide refrigerator (100) having a high reliability.

## Description

### TECHNICAL FIELD

The present invention relates to a refrigerator and a home appliance service system in which the refrigerator is used.

### BACKGROUND ART

A system is proposed, which exchanges information with a home appliance via a communication network such as the internet to improve the convenience in using the home appliance. For example, a system that allows an accurate repair by connecting a refrigerator to the internet and transmitting details of a problem to a service provider is proposed (for example, refer to PTL 1).

In the system described above, not only a refrigerator but also other home appliances are used. Such appliances are referred to as so-called network home appliances, and are expected to spread more and more due to the development of communication infrastructure and evolution of mobile terminals in recent years.

Even in a state of the computerization of home appliances being advanced, since the appliances generally called white goods are used by young and old alike in daily life, convenience in using is very important.

For example, if only one refrigerator is connected to the internet, the problem in using is not so large, and a user can fully enjoy the service. However, as the computerization of home appliances spreads widely, if a plurality of home appliances are connected to the internet and come to be subject to the service, in a bidirectional exchange of the information, it becomes difficult for the elderly and children to identify which appliance the information is for, and thus, a problem of difficulty in using occurs. In addition, for example, in a case where there are two refrigerators at home, an occurrence of a problem in that the user sets an inside temperature in one refrigerator different from that in another refrigerator may be foreseen.

In addition, measures in terms of security are also major issues. In view of the reality of undergoing cyber damage even in the systems of government organizations the security of which is protected to an extremely high level, there is a possibility that a home appliance or the information at home may be damaged due to the computerization of home appliances. For example, there exist a risk that the information in a home appliance at home may flow out and a risk that the home appliance may be freely controlled by a third party. Means for preventing such problems is socially taken by various security technologies. However, in a case where the setting of a home appliance is freely changed, there is also a possibility of occurrence of a problem in that the basic function of the product is impaired.

### Citation List

### Patent Literature

**PTL 1:** Japanese Patent Unexamined Publication No. 2002-295939

### SUMMARY OF THE INVENTION

The present invention provides a refrigerator of which the usability and the security safety are high, and a home appliance service system using the refrigerator.

A refrigerator includes a refrigerator body having a plurality of storage rooms, a plurality of doors that open and close the plurality of storage rooms, and an RFID tag that performs proximity communication. In addition, the RFID tag is provided on the uppermost door among the plurality of doors.

In addition, a home appliance service system includes the refrigerator, and a mobile terminal that includes a function of communication with the RFID tag. Bidirectional information communication is performed between the refrigerator and the mobile terminal by an operation of the mobile terminal touching the refrigerator.

### BRIEF DESCRIPTION OF DRAWINGS

Fig. 1 is a front view illustrating a status of using a refrigerator in a first embodiment of the present invention.
Fig. 2 is a sectional view illustrating a schematic configuration of the refrigerator in the first embodiment of the present invention seen from the side.
Fig. 3 is a sectional view illustrating a schematic configuration of the refrigerator in the first embodiment of the present invention seen from the top.
Fig. 4 is a front view illustrating a configuration of an operation unit of the refrigerator in the first embodiment of the present invention.
Fig. 5 is a functional block diagram illustrating a schematic configuration of a home appliance service system in the first embodiment of the present invention.
Fig. 6 is a flow chart explaining the operation of the home appliance service system in the first embodiment of the present invention.
Fig. 7 is a front view illustrating a status of using a refrigerator in a second embodiment of the present invention.
Fig. 8 is a sectional view illustrating a schematic configuration of the refrigerator in the second embodiment of the present invention seen from the side.
Fig. 9 is a sectional view illustrating a schematic configuration of the refrigerator in the second embodiment of the present invention seen from the top.
Fig. 10 is a front view illustrating a configuration of an operation unit of the refrigerator in the second embodiment of the present invention.
Fig. 11 is a diagram illustrating a manner in which a typical user holds a mobile terminal in the second embodiment of the present invention.
Fig. 12 is a functional block diagram illustrating configurations of the refrigerator and a control unit of the mobile terminal in the second embodiment of the present invention.
Fig. 13 is a flow chart explaining an operation of the refrigerator and the mobile terminal in the second embodiment of the present invention.
Fig. 14 is a sectional view illustrating another example of a schematic configuration of the refrigerator in the second embodiment of the present invention seen from the top.
Fig. 15 is a sectional view illustrating still another example of a schematic configuration of the refrigerator in the second embodiment of the present invention seen from the top.
Fig. 16 is a front view illustrating a status of using a refrigerator in a third embodiment of the present invention.
Fig. 17 is a sectional view illustrating a schematic configuration of the refrigerator in the third embodiment of the present invention seen from the side.
Fig. 18 is a sectional view illustrating a schematic configuration of the refrigerator in the third embodiment of the present invention seen from the top.
Fig. 19 is a front view illustrating a configuration of an operation unit of the refrigerator in the third embodiment of the present invention.
Fig. 20 is a diagram illustrating a manner in which a typical user holds a mobile terminal in the third embodiment of the present invention.
Fig. 21 is a functional block diagram illustrating configurations of the refrigerator and a control unit of the mobile terminal in the third embodiment of the present invention.
Fig. 22 is a flow chart explaining an operation of the refrigerator and the mobile terminal in the third embodiment of the present invention.
Fig. 23 is a sectional view illustrating another example of a schematic configuration of the refrigerator in the third embodiment of the present invention seen from the top.
Fig. 24 is a front view illustrating a configuration of the operation unit of the refrigerator in the third embodiment of the present invention.

### DESCRIPTION OF EMBODIMENTS

Hereinafter, the embodiments of the present invention will be described in detail with reference to the drawings. The present invention will not be limited to the embodiments.

### (First embodiment)

Firstly, a first embodiment of the present invention will be described.

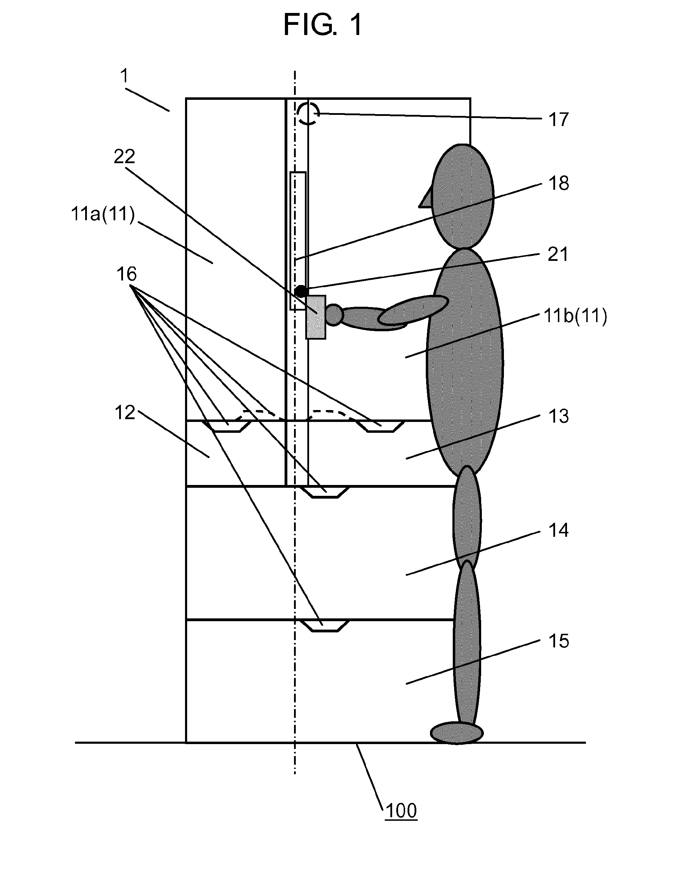

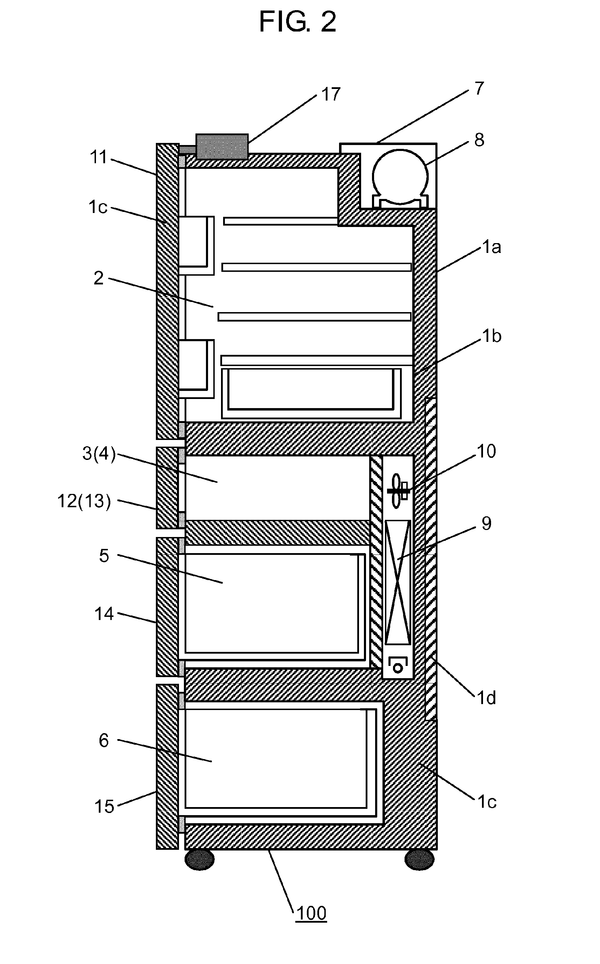

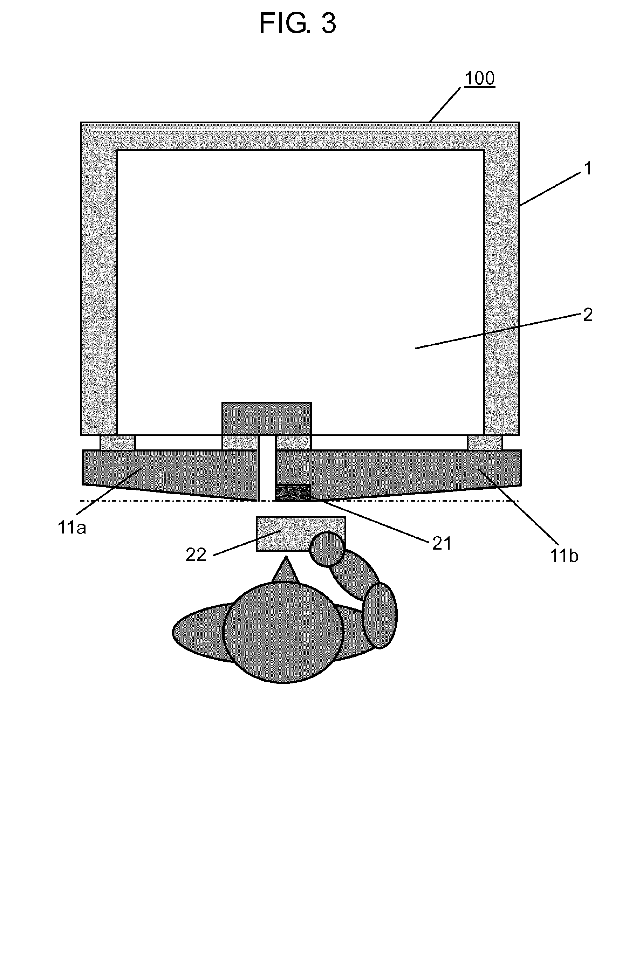

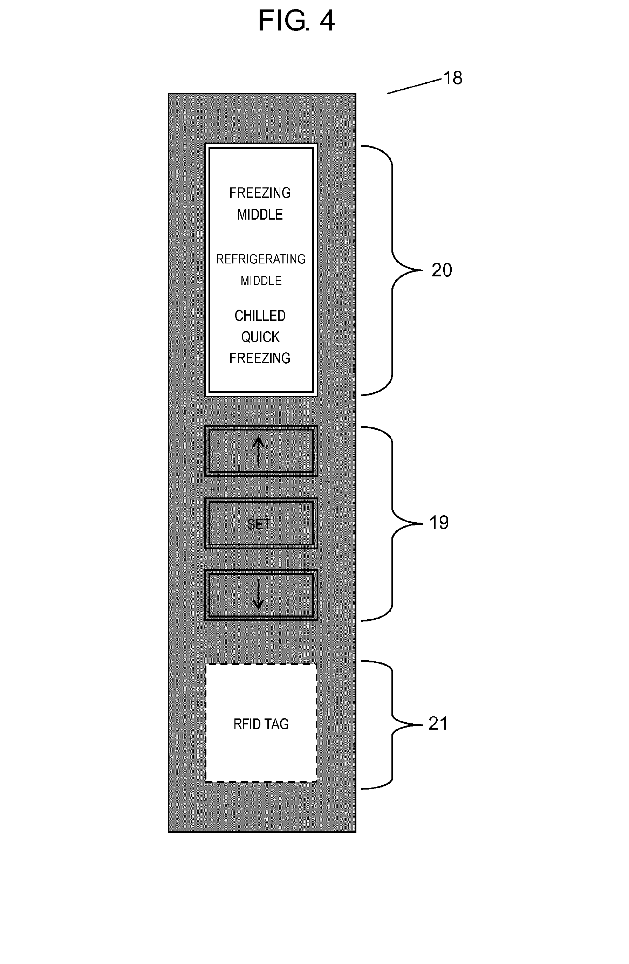

Fig. 1 is a front view illustrating a status of using refrigerator 100 in a first embodiment of the present invention, Fig. 2 is a sectional view illustrating a schematic configuration of refrigerator 100 seen from the side, Fig. 3 is a sectional view illustrating a schematic configuration of refrigerator 100 seen from the top, and Fig. 4 is a front view illustrating a configuration of operation unit 18 of refrigerator 100.

Refrigerator 100 includes refrigerator body 1 and a plurality of storage rooms. The plurality of storage rooms are configured to include, in an order from the top, refrigerating room 2, ice making room 3 and temperature switching room 4 positioned at the side of ice making room 3, freezing room 5, and vegetable room 6. The layout can appropriately be changed, if necessary. A temperature in temperature switching room 4 can be switched, for example, to be in a range from approximately -18°C which is a temperature in freezing room 5 to approximately 6°C which is a temperature in vegetable room 6.

Refrigerator body 1 is configured to include outer box 1a in which an iron plate is mainly used, inner box 1b molded by resin such as ABS, and rigid polyurethane foam 1c filled into and foamed in a space between outer box 1a and inner box 1b. In refrigerator body 1, in order to improve heat insulation, vacuum heat insulating material 1d is partially embedded in rigid polyurethane foam 1c, if necessary. For example, in the example illustrated in Fig. 2, vacuum heat insulating material 1d is affixed to the space of the rear surface portion corresponding to ice making room 3, temperature switching room 4, and freezing room 5, and thus, becomes a complex with rigid polyurethane foam 1c.

Top surface portion of refrigerator body 1 has a shape having a step-shaped recess in the direction toward the rear surface of refrigerator 100. In the step-shaped recess, machine room 7 is formed, and in machine room 7, compressor 8 and components for a high-pressure side of a freezing cycle such as a dryer for water removal, and a refrigerator control unit, are accommodated. In this way, the storage capacity of vegetable room 6 at the bottom can be expanded.

On the other hand, regarding cooler 9 that configures a low pressure side of the freezing cycle, a plurality of storage rooms are cooled by cooling air generated in cooler 9 being forcibly blown by cooling fan 10 disposed at the rear side of freezing room 5.

Refrigerating room 2, ice making room 3, temperature switching room 4, freezing room 5, and vegetable room 6 are configured so as to be opened and closed by doors 11 to 15 which are provided respectively corresponding thereto. Each of the plurality of doors 11 to 15 has handle portion 16. In addition, each of the plurality of doors 11 to 15, similarly to refrigerator body 1, is formed by rigid polyurethane foam 1c being filled into and foamed in the inner portion sealed by the metal material of the outer surface and the resin material of the inner surface such as ABS. In a part of the outer surface of door 11, a substrate storage portion formed of the resin material is disposed, and inside the substrate cover, operation unit 18 having radio frequency identification (RFID) tag 21 is disposed. By covering RFID tag 21 with the resin material, it is possible to prevent the electromagnetic transmission from being influenced by the metal.

The outer surface of door 11 may be formed of a glass material instead of the metal, and by disposing operation unit 18 close to inside the glass, it is also possible to prevent the electric transmission from being influenced by the metal material.

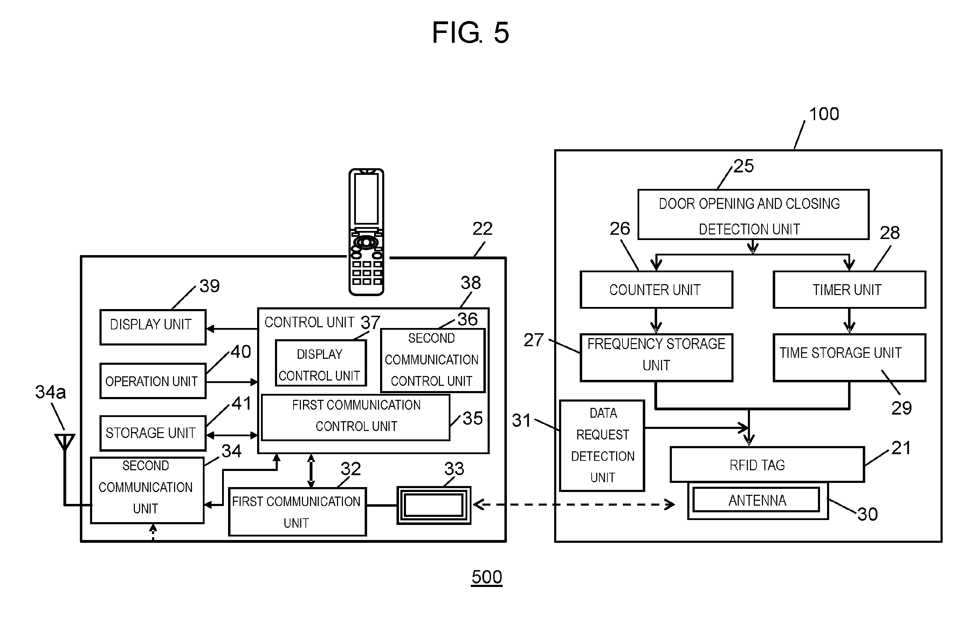

Door opening and closing detection unit 25 (refer to Fig. 5) is provided in each of the plurality of doors 11 to 15, and the frequency of the door opening and closing data and accumulated door opening time data are processed in the control unit of refrigerator 100.

In refrigerator 100 in the present embodiment, door 11 of the uppermost refrigerating room 2 is a pair of double-door type doors, and is configured to include two doors 11a and 11b having different areas from each other disposed at the right and left of refrigerating room 2. Right side door 11b having a larger area than the other has automatic door opening and closing mechanism 17 and is configured so as to be opened by only slightly pressing door 11b, and the opening and closing of the door is detected by door opening and closing detection unit 25. In addition, at the end portion of right side door 11b, operation unit 18 is provided in the vertical direction, and a DC wiring for the power supply to operation unit 18 or for the transmission of the control signal is disposed. On the other hand, an AC wiring is disposed at left side door 11a, not right side door 11b.

Operation unit 18, as illustrated in Fig. 4, includes electrostatic touch type setting switch 19 for performing the temperature setting of the plurality of storage rooms or the like and setting status display unit 20 disposed at the upper portion of setting switch 19. In addition, in the example in Fig. 4, RFID tag 21 that outputs and transmits at least one of the frequency of the door opening and closing data and the accumulated door opening time data is provided on operation unit 18.

FID tag 21 is provided in a range of a height of 900 mm or higher and 1500 mm or lower from the bottom of refrigerator body 1. As illustrated in Figs. 1 and 3, when the user causes his mobile terminal 22 such as a mobile phone, a smart phone, or a PDA to approach RFID tag 21 of refrigerator 100, the data received from refrigerator 100 is displayed on display unit 39 (refer to Fig. 5) of mobile terminal 22.

Home appliance service system 500 is configured to include the above-described refrigerator 100 and mobile terminal 22. In the present embodiment, RFID tag 21 of a passive tag type and a proximity type having a communication distance of 100 mm or less is used.

In addition, in RFID tag 21, an ID number with which the product can be identified is registered, and the individual product is identified with the transmission and receiving of the ID number.

As described above, refrigerator 100 in the present embodiment includes refrigerator body 1 having a plurality of storage rooms, a plurality of doors 11 to 15 that open and close the plurality of storage rooms, and RFID tag 21 that performs the proximity communication. In addition, RFID tag 21 is provided on the uppermost door 11, among the plurality of doors 11 to 15.

In this way, a specific communication failure of refrigerator 100 or dirt on mobile terminal 22 which easily occur due to spilling of water or dirt of the foods at the time of taking foods in and out can be prevented, and thus, it is possible to provide refrigerator 100 having a high reliability.

An issue of refrigerator 100 in a case of communicating by an operation of touching mobile terminal 22 is selecting the position where RFID 21 is disposed. In a case where a wireless communication device in the related art is mounted, there is no problem in disposing the device at a position where the hands cannot reach or a position which is not seen such as the rear surface or the top surface of refrigerator 100. However, in a case where communication by an intuitive operation of touching at a proximity distance is realized in order to prevent a miscommunication with other home appliances, it is necessary to dispose RFID tag 21 in an area where the hands can reach, that is, at the front surface portion of refrigerator 100 from the viewpoint of a convenience in using.

In a case where RFID tag 21 is disposed at the front surface of refrigerator 100, the user makes his hand holding mobile terminal 22 be in proximity to refrigerator body 1. For this reason, there is a case where water or dirt attached to the hand is attached to the surface of RFID tag 21 disposition portion of refrigerator body 1, or water or dirt of the foods is spilt at the time of taking food in and out and becomes attached to the surface of antenna disposition portion of RFID tag 21 of refrigerator body 1, and thus, the communication state of refrigerator body 1 deteriorates.

In addition, even though the hand may not be dirty, in order to perform the communication, when mobile terminal 22 itself which is a precision instrument or the hand holding mobile terminal 22 is brought into proximity to refrigerator body 1, there is also a possibility of a problem occurring that, conversely, dirt or water from refrigerator body 1 may become attached to the hand and cause an incorrect operation of a touch panel of mobile terminal 22, or make the screen hard to see.

With respect to these problems, in refrigerator 100, by providing a communication unit on the uppermost door, since the food is not taken in and out from the portion above the communication unit, and there is no possibility of water or dirt falling and attaching when food is taken in and out.

In addition, when the opening and closing of the door is performed, the cooling air in the refrigerator flows out and spills to fall to the door positioned at the lower portion of the opened door, and thus the temperature of refrigerator 100 decreases. When the temperature on the surface of RFID tag 21 provided on the door decreases to a temperature lower than the dew-point temperature due to the cooling air leakage, the condensation occurs. In such a case also, there is a possibility that electromagnetic waves are inhibited by the water and a problem may occur. However, in refrigerator 100, since RFID tag 21 is provided on the uppermost door and the opening and closing of the door is not performed at the portion above RFID tag 21, the temperature of RFID tag 21 does not decrease, and there is no concern regarding the communication failure due to condensation.

In refrigerator 100 having a layout in which the freezing room of low room temperature is disposed at the upper portion, the temperature of the lower door easily decreases, of which the temperature of the leaked cooling air is low, and therefore, the advantageous effect is large.

Data of refrigerator 100 side, for example, the frequency of the door opening and closing or the like can be displayed on display unit 39 of mobile terminal 22 to be recognized, and it is possible to save the power for displaying occurring in a case of providing the display unit on refrigerator body 1 side.

In addition, since the communication is performed using ultra-proximity communication such as with RFID tag 21, the target home appliance is not mistakenly identified and thus, the problem of the individual determination such as in the system in which the general wireless communication is performed, can be eliminated. Therefore, it is possible to improve the usability. In addition, since the data of RFID tag 21 is directly transmitted to and received by mobile terminal 22, the problem of security such as in the case where the information is read via the communication network such as the internet can also be eliminated. Therefore, it is possible to improve the security.

Next, a configuration of home appliance service system 500 will be described.

Fig. 5 is a functional block diagram illustrating a schematic configuration of home appliance service system 500 in the first embodiment of the present invention.

As illustrated in Fig. 5, refrigerator 100 includes door opening and closing detection unit 25, counter unit 26, frequency storage unit 27, timer unit 28, time storage unit 29, RFID tag 21, data request detection unit 31, and antenna 30.

Counter unit 26 counts the frequency of the door opening and closing detected by door opening and closing detection unit 25.

Frequency storage unit 27 stores the frequency of the door opening and closing counted by counter unit 26.

Timer unit 28 measures the door opening time when the door is open and closed, detected by door opening and closing detection unit 25.

Time storage unit 29 accumulates and stores the door opening time measured by timer unit 28.

RFID tag 21 functions as an output unit of the frequency of the door opening and closing data stored in frequency storage unit 27 and the accumulated door opening time data stored in time storage unit 29, and is formed of an IC chip integrated with antenna 30 and the like.

When mobile terminal 22 approaches and requests the data, data request detection unit 31 detects the data. RFID tag 21 itself includes data request detection unit 31, and when data request detection unit 31 detects a data request, then data request detection unit 31 supplies power to RFID tag 21 and causes RFID tag 21 to operate.

Therefore, when mobile terminal 22 approaches and requests the data, RFID tag 21 is brought into the operation state by data request detection unit 31, and transmits the recent frequency of the door opening and closing data and the accumulated door opening time data stored in frequency storage unit 27 and time storage unit 29 respectively, to the outside via antenna 30.

Next, in the present embodiment, a typical mobile phone is used as mobile terminal 22, and mobile terminal 22 includes first communication unit 32, antenna 33 of first communication unit 32, second communication unit 34, antenna 34a of second communication unit 34, display unit 39, operation unit 40, storage unit 41, and control unit 38. Control unit 38 includes first communication control unit 35, second communication control unit 36, and display control unit 37.

First communication unit 32 performs proximity communication. Second communication unit 34 is a communication unit for voice calls and internet communication.

First communication control unit 35 controls first communication unit 32. Second communication control unit 36 controls second communication unit 34.

Display unit 39 is formed of a liquid crystal display, or the like. Display control unit 37 controls the displaying of display unit 39. Operation unit 40 is formed of a touch switch, or the like.

By the user's operation of operation unit 40, when mobile terminal 22 is switched to the proximity communication by first communication control unit 35, mobile terminal 22 transmits the data request signal to the opposite party and is brought into the state of receiving the data from the opposite party. In association with this, display control unit 37 switches the display of display unit 39, and then displays the data received by first communication unit 32 on display unit 39. Accordingly, by the user causing antenna 33 of first communication unit 32 to be close to RFID tag 21 of refrigerator 100, mobile terminal 22 can receive the frequency of the door opening and closing data, or the like from RFID tag 21, and can display the data on display unit 39.

As described above, home appliance service system 500 in the present embodiment includes refrigerator 100 having RFID tag 21 and mobile terminal 22 having the communication function with RFID tag 21. In addition, home appliance service system 500 performs bidirectional information communication between refrigerator 100 and mobile terminal 22 by the operation of mobile terminal 22 touching refrigerator 100.

In this way, even if there is a plurality of home appliances to be selected, at the time of performing the communication, the user brings mobile terminal 22 close to the periphery of a target home appliance in order to certainly touch the body of the target home appliance. In this way, even the elderly, children, or the like can intuitively understand the target home appliance without misunderstanding, and can safely use the home appliance without any hesitation in operation, and thus it is easy to use. In addition, since the data is directly transmitted and received to and from the home appliance and mobile terminal 22 without intervention of the internet, it is possible to improve the safety without occurrence of a security problem.

Home appliance service system 500 can further have application software mounted thereon that realizes bidirectional service with a plurality of home appliances, and can include a server that performs information management and the control of the home appliances.

By such a configuration, even if there is a plurality of home appliances to be selected, at the time of performing the communication, the user brings mobile terminal close to the periphery of a target home appliance in order to certainly touch the body of the target home appliance. For this reason, it is possible to cause the user to intuitively understand the target home appliance without misunderstanding. Further, even if the user does not remember a model name, or the like, it is possible to start the operation of the application by the user's operation of touching of the target appliance, and to determine the target appliance. Accordingly, safe use by the user is possible without hesitation in the operation, and the system that is easy to use can be realized.

In addition, regarding the communication, since communication means between the proximity communication enabled RFID tag 21 and mobile terminal 22 is used and the communication distance is limited to a relatively short distance, there is no case of erroneous determination of the target appliance.

Furthermore, by using the communication function or the connection function to the internet already included in mobile terminal 22, inexpensive RFID tag 21 can be prepared without providing a communication function in each of the plurality of home appliances, and thus, it is possible to realize providing the service. Therefore, it is possible to provide a low-cost service with resource saving by eliminating unnecessary duplication of the functions. Furthermore, since there is no need for the home appliance to stand-by for receiving all the time, it is possible to contribute to energy conservation.

Furthermore, the communication between the target home appliance and mobile terminal 22 is performed by causing mobile terminal 22 to become close to the target home appliance and to directly read the data in RFID tag 21. In this way, the safety can be improved by removing the security problem such as in a case where the information is read via a communication network such as the internet.

Next, the operation of home appliance service system 500 will be described.

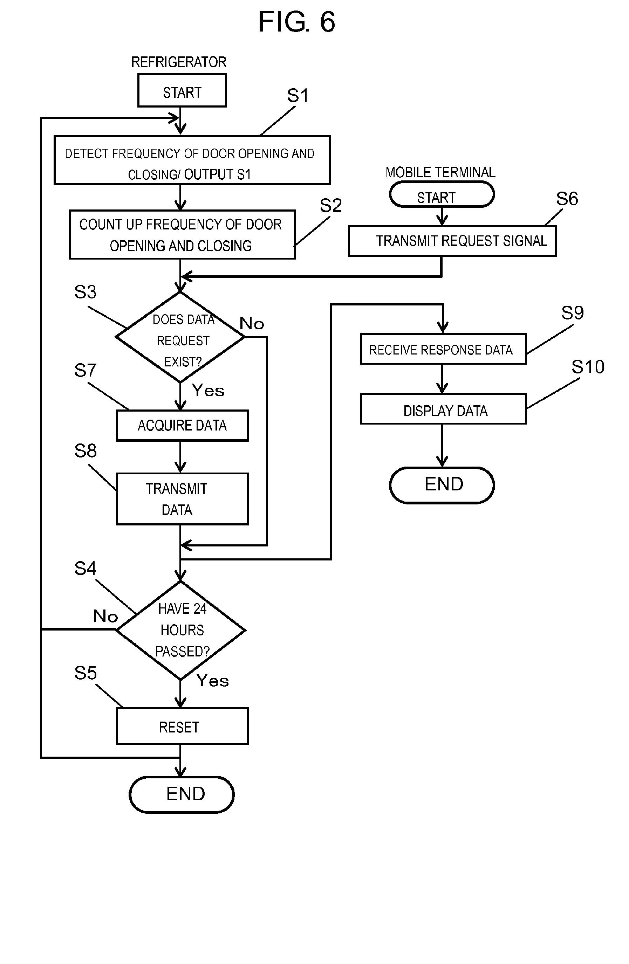

Fig. 6 is a flow chart explaining the operation of home appliance service system 500 in the first embodiment of the present invention.

First, it is assumed that the user opens the door of refrigerator 100, for example, right side door 11b of refrigerating room 2 in order to take food in or out. At this time, door opening and closing detection unit 25 detects the opening and closing of the door, and outputs signal S1 to counter unit 26 (S1).

Counter unit 26, receiving signal S1, adds the increment "+1" to the counted number which is the frequency of the door opening and closing, and outputs the result to frequency storage unit 27 (S2).

Data request detection unit 31 checks whether or not there is a data request from mobile terminal 22 (S3).

If there is no data request in STEP S3 (No in S3), counter unit 26 of refrigerator 100 checks whether or not a predetermined time, for example, one day (24 hours) has passed from the start of counting (S4).

In STEP S4, if one day has not passed (No in S4), the process returns to STEP S1. On the other hand, in STEP S4, if one day has passed (Yes in S4), the frequency of the door opening and closing stored in frequency storage unit 27 up to now is reset (S5), and the process returns to STEP S1.

In the state in which refrigerator 100 performs the above control, the user causes antenna 33 portion of mobile terminal 22 to closely approach RFID tag 21 on the refrigerator door, and then, first communication unit 32 transmits the data request signal (S6). Then, data request detection unit 31 of refrigerator 100 detects the data request signal (Yes in S3), and RFID tag 21 starts the operation and acquires the frequency of the door opening and closing data and the accumulated door opening time data stored in frequency storage unit 27 and time storage unit 29 respectively (S7), and the data is transmitted via antenna 30 (S8). Mobile terminal 22 receives the data (S9) and displays the data on display unit 39 (S10).

As described above, in home appliance service system 500 in the present embodiment, the user causes mobile terminal 22 to closely and directly approach the target refrigerator 100 itself to acquire the data. Accordingly, if there is a plurality of refrigerators 100, at the time of performing the communication, the user brings mobile terminal 22 so as to certainly touch the target home appliance 100. In this way, it is possible to provide the system, in which even children can intuitively understand the target home appliance without misunderstanding, can safely use the home appliance without any hesitation in operation, and which can be used easily. In addition, since the data is directly transmitted and received to and from the target refrigerator 100 and mobile terminal 22 without intervention of the internet, it is possible to improve the safety without occurrence of the security problem.

The user can ascertain the frequency of the door opening and closing and the accumulated door opening time by viewing display unit 39 of mobile terminal 22. In this way, for example, when the displayed frequency of the door opening and closing or the accumulated door opening time is large, since the user may be careful so as to reduce the frequency of the door opening and closing thereafter, power saving can be promoted.

In addition, since refrigerator 100 does not need the display power for notifying the user of the frequency of the door opening and closing and the accumulated door opening time, it is possible to save that much power, and to improve the energy conservation of refrigerator 100. That is, in refrigerator 100, the user can ascertain the frequency of the door opening and closing and the accumulated door opening time via display unit 39 of mobile terminal 22. Accordingly, refrigerator 100 itself does not consume any power at all for displaying the frequency of the door opening and closing and the accumulated door opening time, and it is possible to promote that much energy conservation.

Furthermore, in the present embodiment, data request detection unit 31 is provided at refrigerator 100 side. Only in a case where data request detection unit 31 detects that the data is requested, power is supplied to RFID tag 21 and RFID tag 21 transmits the data. In this way, the power is not consumed by RFID tag 21 when the data is not requested, and again it is possible to achieve that much power conservation.

In addition, in refrigerator 100 in the present embodiment, RFID tag 21 is provided on door 11 of refrigerating room 2 of refrigerator 100, that is, door 11 that opens and closes the uppermost refrigerating room 2 among a plurality of storage rooms. In this way, such failures as in the case of providing RFID tag 21 on the doors located at the lower part are less likely to occur. That is, there is not such a failure in which the cooling air leaking and sinking when the door above the door on which RFID tag 21 is provided is opened touches RFID tag 21, and condensation occurs on the surface of RFID tag 21, and thus, the communication state deteriorates and the component reliability decreases. For example, compared to the case where RFID tag 21 is provided on freezing room 5, or the like, the difference in temperature between the surface and the inner surface of RFID tag 21 is suppressed to be small, the occurrence of condensation can be suppressed. Therefore, between mobile terminal 22 and refrigerator 100, the exchange of at least one of the frequency of the door opening and closing and the accumulated door opening time can be accurately and reliably performed, and thus, it is possible to configure refrigerator 100 with high quality, and the user can safely use refrigerator 100.

In addition, RFID tag 21 is provided in a range of a height of 900 mm or higher and 1500 mm or lower from the bottom of refrigerator body 1. For this reason, a typical user, for example, a housewife can cause mobile terminal 22 to closely approach RFID tag 21 without adopting an excessive posture such as leaning down. Moreover, at that time, the user can cause mobile terminal 22 to closely approach RFID tag 21 while visibly recognizing display unit 39 of mobile terminal 22. Therefore, it is possible to improve the usability.

In addition, RFID tag 21 is provided on door 11 corresponding to refrigerating room 2 among a plurality of storage rooms. Since the temperature in refrigerating room 2 is higher than that in ice making room 3 or freezing room 5, it is possible to suppress the influence of the cooling air in the room on RFID tag 21 to be small. Therefore, since the difference in temperature between the surface and the inner portion of RFID tag 21 is suppressed to be small, and the occurrence of condensation can be suppressed, it is possible to reduce the failure such as the deterioration of the communication state and the decrease of the component reliability.

Furthermore, RFID tag 21 is provided on right side door 11b of a pair of double-door type doors 11 among the plurality of doors 11 to 15. RFID tag 21 is incorporated into operation unit 18 provided at the end portion of right side door 11b. In a case where the user performs the affixing of stickers or the like to door 11b, there are many cases where the sticker is affixed at the center portion of door 11b, and a case where the sticker covers the surface of RFID tag 21 located at the end portion of door 11b is less. Therefore, the user can directly cause mobile terminal 22 to closely face RFID tag 21. In this way, the erroneous transmission and receiving of the data due to the approaching of mobile terminal 22 over the sticker can be reduced, and the user does not need to perform the action for dispelling the sticker covered by RFID tag 21 surface and causing mobile terminal 22 to closely approach RFID tag 21, and thus, it is possible to secure reliable communication performance and to improve the usability.

In addition, since RFID tag 21 is provided on right side door 11b of refrigerating room 2 among double-door type doors 11, it is possible to reduce the occurrence of the failure in RFID tag 21 due to the cooling air in the refrigerating room. Generally, there are relatively many right-handed users and the frequency of the opening and closing of right side door 11b by right-handed users is high. However, in a case where right side door 11b is opened and the cooling air in the refrigerating room leaks out, there is a high possibility that the cooling air diffuses in the surface of left side door 11a at the opposite side to right side door 11b, and thus, the possibility that the cooling air goes around into the surface side of right side door 11b (RFID tag 21 installed side) which is the rear side seen from the leaked cooling air, is very low. Therefore, there is almost no possibility that the cooling air touches RFID tag 21 provided on right side door 11b, and it is possible to suppress the failure such as the deterioration of the communication state and the decrease of the component reliability due to condensation occurring on the surface of RFID tag 21.

In addition, in the present embodiment, doors 11 are a pair of asymmetric double-doors type doors, and right side door 11b has a larger area than left side door 11a. Accordingly, since the frequency of opening and closing of right side door 11b is high and the area of right side door 11b is large, the amount of cooling air leaking from right side door 11b is apt to increase. For this reason, by RFID tag 21 being provided on right side door 11b side where the leaked cooling air increases, the influence of the going-around cooling air described above can be reduced, and thus, it is possible to reduce concerns such as the deterioration of the communication state and the decrease of the component reliability, and is effective.

In addition, on door 11b on which RFID tag 21 is provided, there are provided a wiring to operation unit 18 and a wiring through which the door opening and closing data from frequency storage unit 27 or time storage unit 29 in the control unit of refrigerator 100 is transmitted. However, both of these are DC wirings and an AC wiring is not provided on door 11b. Accordingly, the influence of noise occurring due to the AC wiring does not interfere with the transmission of RFID tag 21, and thus, it is possible to secure accurate and reliable communication performance.

Furthermore, on the right side door 11b of refrigerating room 2, on which RFID tag 21 is provided, automatic door opening and closing mechanism 17 is provided. In this way, even if a hand of a user working in the kitchen is wet with water, it is possible to reduce the occurrence of the failure of RFID tag 21 due to the water. That is, since the user only slightly touches door 11b, the amount of water drops attached to the surface of door 11b is extremely small or the water drops do not attach when opening and closing the door. Accordingly, it is possible to prevent, when mobile terminal 22 is close to RFID tag 21, the water drops attached to the surface of door 11b from being attached to RFID tag 21 itself or mobile terminal 22 which is close to RFID tag 21, and then wetting or contaminating RFID tag 21 or mobile terminal 22, and thus, it is possible to reduce the failure such as the deterioration of the communication state and the decrease of the component reliability.

Furthermore, RFID tag 21 is disposed at the position separated from handle portions 16 respectively provided on the plurality of doors 11 to 15 and a position higher than handle portion 16. In this way, when opening doors 11 to 15 with a wet hand, even though water drops may be attached to handle portion 16 and the water drops attached to handle portion 16 may spread to the right and left side or drop down, the water drops do not reach the position where RFID tag 21 is disposed. Accordingly, as described before, even if mobile terminal 22 is brought to be close to RFID tag 21, it is possible to prevent RFID tag 21 itself or mobile terminal 22 which is close to RFID tag 21 from becoming wet or contaminated by the water drops attached to the surface of handle portion 16 of doors 11 to 15, and thus, it is possible to reduce the failure such as the deterioration of the communication state and the decrease of the component reliability.

As described above, according to refrigerator 100 described in the present embodiment, the usability and the safety can be improved. However, refrigerator 100 described in the present embodiment is one aspect for realizing the present invention, and various modification can be made within the objective scope of the present invention.

For example, in the present embodiment described above, the data provided to the user is both that of the frequency of the door opening and closing and the accumulated door opening time for the power saving education. However, the data may be any one of the above. In addition, any other data may be provided.

In addition, RFID tag 21 is provided on door 11b of refrigerating room 2, but may be provided on the other doors 12 to 15, or may be provided on left side door 11a among a pair of double-door type doors 11. In a case where RFID tag 21 is provided on left side door 11a, when the user is a right-handed person, since the user can easily open and close door 11b by the dominant hand without crossing the hand, it is possible to cause mobile terminal 22 to closely approach RFID tag 21 using the left hand at the same time as opening and closing door 11b by the right hand, and thus, the usability can be improved.

In addition, RFID tag 21 is described as having only a transmission function. However, using RFID tag 21 having a receiving function, for example, an application can be adopted, in which set temperature data may be transmitted from mobile terminal 22 side to RFID tag 21 such that the temperature in the refrigerator at refrigerator 100 side can be set, or the frequency of the door opening and closing data and the accumulated door opening time data from the control unit of refrigerator 100 may be received via short distance communication rather than via the wiring.

Furthermore, in a case where RFID tag 21 has the transmission and receiving function, by providing the transmission and receiving unit at refrigerator body 1 side also corresponding to RFID tag 21 provided on the door, when the door is opened, RFID tag 21 at refrigerator body 1 side may detect the opening, that is, RFID tag 21 on the door may also serve as door opening and closing detection unit 25. In this way, it is possible to simplify the configuration. While it is preferable that door opening and closing detection unit 25 be also provided corresponding to all the doors, door opening and closing detection unit 25 may however be provided on a proportion of doors, for example, one or two doors of which the frequency of opening and closing is high.

Furthermore, even though it is not described in the present embodiment, the frequency of the door opening and closing and the accumulated door opening time can be checked by a personal computer at the outside of the home, for example, at the company using the internet line via second communication unit 34 of mobile terminal 22. According to this configuration, it is possible to notify children or a grandfather at home to pay attention to reducing the frequency of opening and closing the door of refrigerator 100.

Regarding the communication method, as long as the information can be transmitted or received with the target being limited by the operation of touching or holding the product, other short distance communication methods can be used.

### (Second embodiment)

Next, a second embodiment of the present invention will be described.

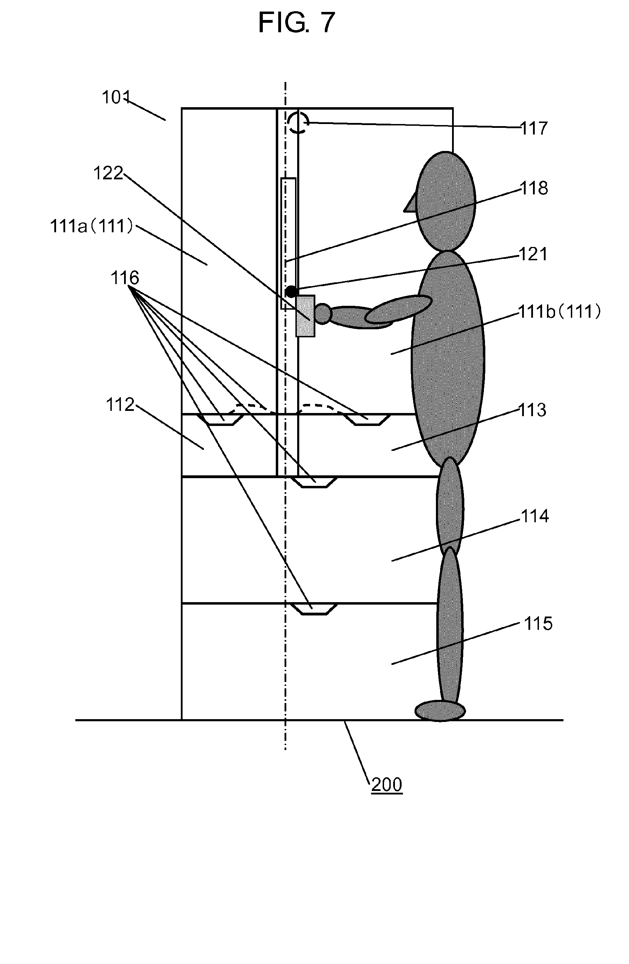

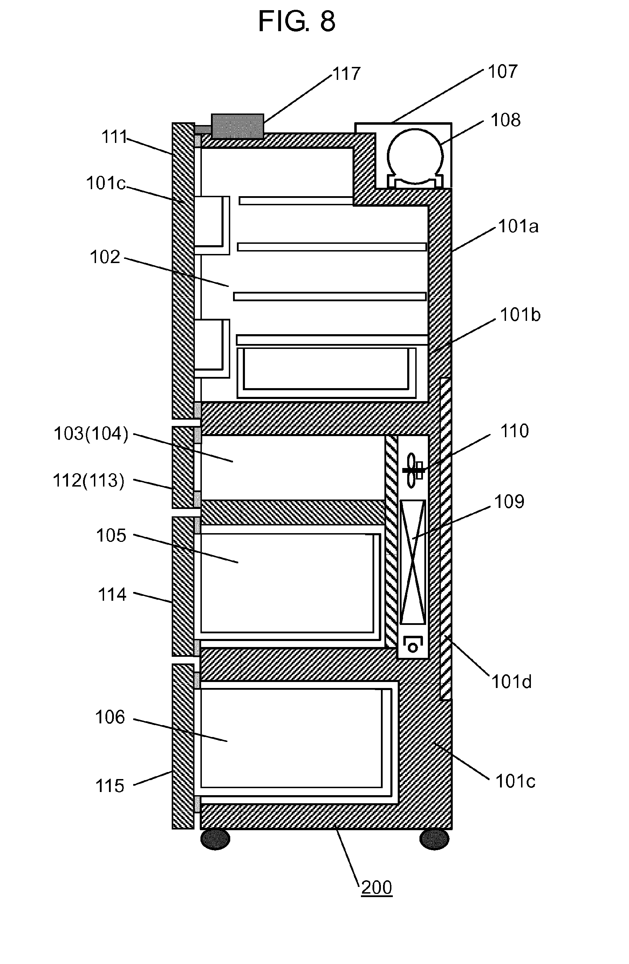

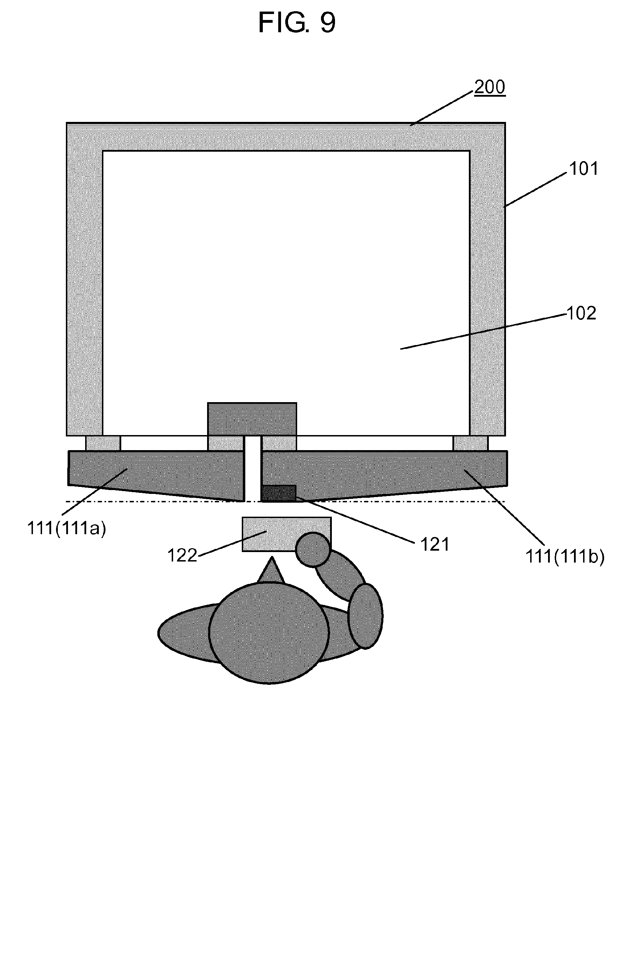

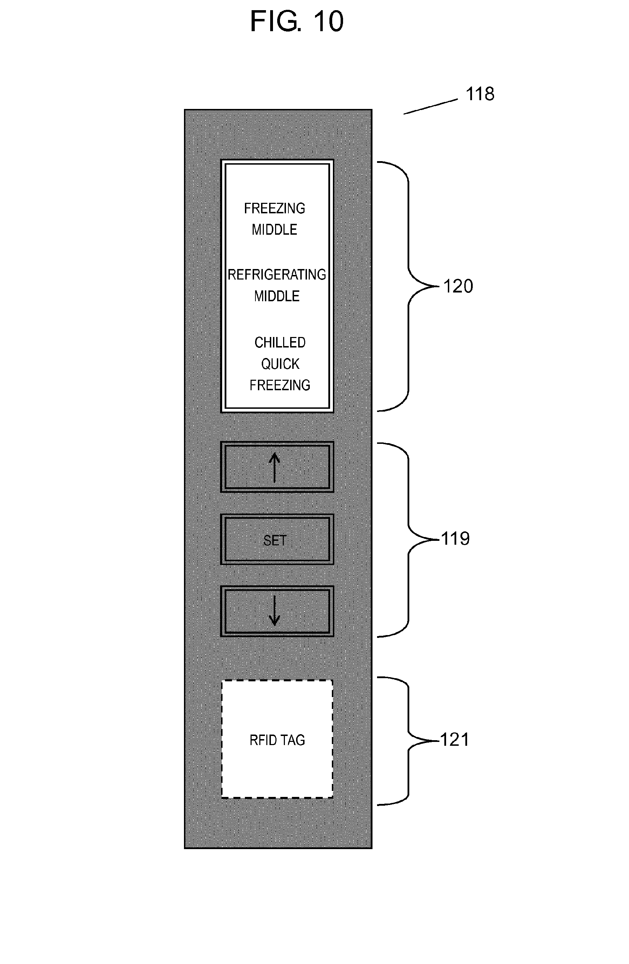

Fig. 7 is a front view illustrating a status of using refrigerator 200 in a second embodiment of the present invention, Fig. 8 is a sectional view illustrating a schematic configuration of refrigerator 200 seen from the side, Fig. 9 is a sectional view illustrating a schematic configuration of refrigerator 200 seen from the top, and Fig. 10 is a front view illustrating a configuration of operation unit 118 of refrigerator 200.

Refrigerator 200 includes refrigerator body 101 and a plurality of storage rooms. The plurality of storage rooms are configured to include, in an order from the top, refrigerating room 102, ice making room 103 and temperature switching room 104 positioned at the side of ice making room 103, freezing room 105, and vegetable room 106. The layout can appropriately be changed, if necessary. A temperature in temperature switching room 104 can be switched, for example, to be in a range from approximately -18°C which is a temperature in freezing room 105 to approximately 6°C which is a temperature in vegetable room 106.

Refrigerator body 101 is configured to include outer box 101a in which an iron plate is mainly used, inner box 101b molded by resin such as ABS, and rigid polyurethane foam 101c filled into and foamed in a space between outer box 101a and inner box 101b. In refrigerator body 101, in order to improve heat insulation, vacuum heat insulating material 101d is partially buried in rigid polyurethane foam 101c, if necessary. For example, in the example illustrated in Fig. 8, vacuum heat insulating material 101d is affixed in the space of the rear surface portion corresponding to ice making room 103, temperature switching room 104, and freezing room 105, and thus, becomes a complex with rigid polyurethane foam 101c.

Top surface portion of refrigerator body 101 has a shape having a step-shaped recess toward the rear surface direction of refrigerator 200. In the step-shaped recess, machine room 107 is formed, and in machine room 107, compressor 108, components for a high-pressure side of a freezing cycle such as a dryer for water removal, and a refrigerator control unit, are accommodated. In this way, the storage capacity of vegetable room 106 at the bottom can be expanded.

On the other hand, regarding cooler 109 that configures a low pressure side of the freezing cycle, a plurality of storage rooms are cooled by cooling air generated in cooler 109 being forcedly blown by cooling fan 110 disposed at the rear side of freezing room 105.

Refrigerating room 102, ice making room 103, temperature switching room 104, freezing room 105, and vegetable room 106 are configured so as to be opened and closed by a plurality of doors 111 to 115 which are provided respectively corresponding thereto. Each of the plurality of doors 111 to 115 has handle portion 116. In addition, each of the plurality of doors 111 to 115, similarly to refrigerator body 101, is formed by rigid polyurethane foam 101c being filled into and foamed in the inner portion sealed by the metal material of the outer surface and the resin material of the inner surface such as ABS. In a part of the outer surface of door 111, a substrate storage portion formed of the resin material is disposed, and inside the substrate cover, operation unit 118 having RFID tag 121 is disposed. By covering RFID tag 121 with the resin material, it is possible to prevent the electric transmission from being influenced by the metal.

The outer surface of door 111 may be formed of a glass material instead of the metal, and by disposing operation unit 118 close to inside the glass, it is also possible to prevent the electric transmission from being influenced by the metal material.

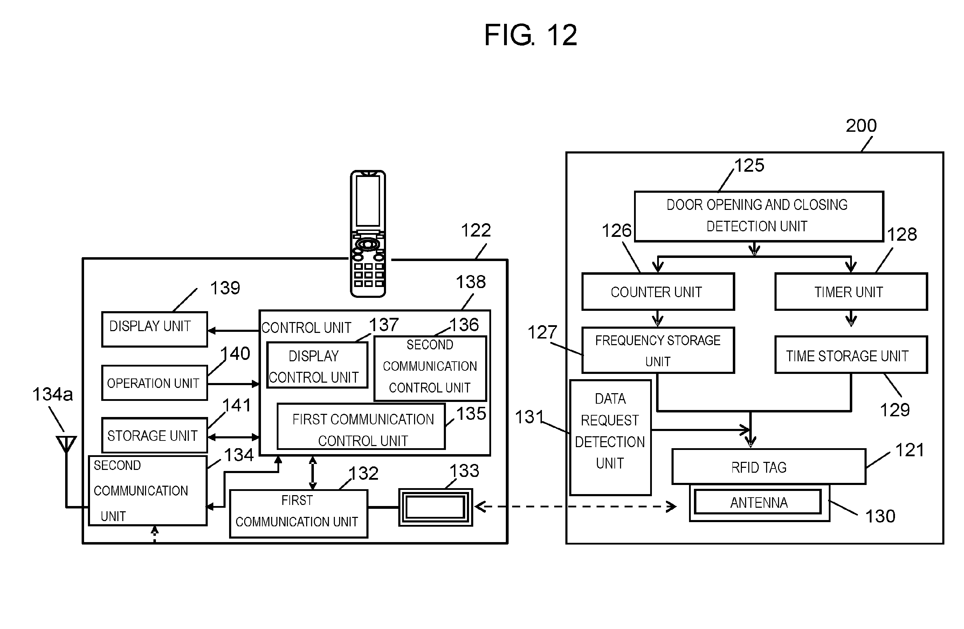

Door opening and closing detection unit 125 (refer to Fig. 12) is provided in each of the plurality of doors 111 to 115, and the frequency of the door opening and closing data and accumulated door opening time data are processed in the control unit of refrigerator 200.

In refrigerator 200 in the present embodiment, door 111 of uppermost refrigerating room 102 is a pair of double-door type doors, and is configured to include doors 111a and 111b having different areas from each other disposed at the right and left of refrigerating room 102.

In addition, as illustrated in Fig. 9, an abutting surface portion of left side door 111a and right side door 111b is formed in a convex shape protruding to the nearest side to the user. At the convex shaped portion, that is, at the end portion of right side door 111b, in the present embodiment, operation unit 118 is provided in the vertical direction, and a DC wiring for the power supply to operation unit 118 or for the transmission of the control signal is disposed. On the other hand, an AC wiring is disposed at left side door 111a, not right side door 111b.

Right side door 111b is configured so as to be opened by only slightly pressing door surface by automatic door opening and closing mechanism 117, and the opening and closing of the door is detected by door opening and closing detection unit 125.

Operation unit 118, as illustrated in Fig. 10, includes an electrostatic touch type setting switch 119 for performing the temperature setting of the plurality of storage rooms and setting status display unit 120 disposed at the upper portion of setting switch 119. In addition, in the example in Fig. 10, RFID tag 121 that outputs and transmits at least any of the frequency of the door opening and closing data and the accumulated door opening time data is provided on operation unit 118.

RFID tag 121 is provided in a range of a height of 900 mm or higher and 1500 mm or lower from the bottom of refrigerator body 101. As illustrated in Figs. 7 and 9, when the user causes his mobile terminal 122 such as a mobile phone, smart phone, or a PDA to approach RFID tag 121 of refrigerator 200, the data received from refrigerator 200 is displayed on display unit 139 (refer to Fig. 12) of mobile terminal 122.

In the present embodiment, RFID tag 121 of a passive tag type and a proximity type having a communication distance of 100 mm or less are used.

In addition, in RFID tag 121, an ID number with which the product can be identified is registered, and the individual product is identified by the transmission and receiving of the ID number.

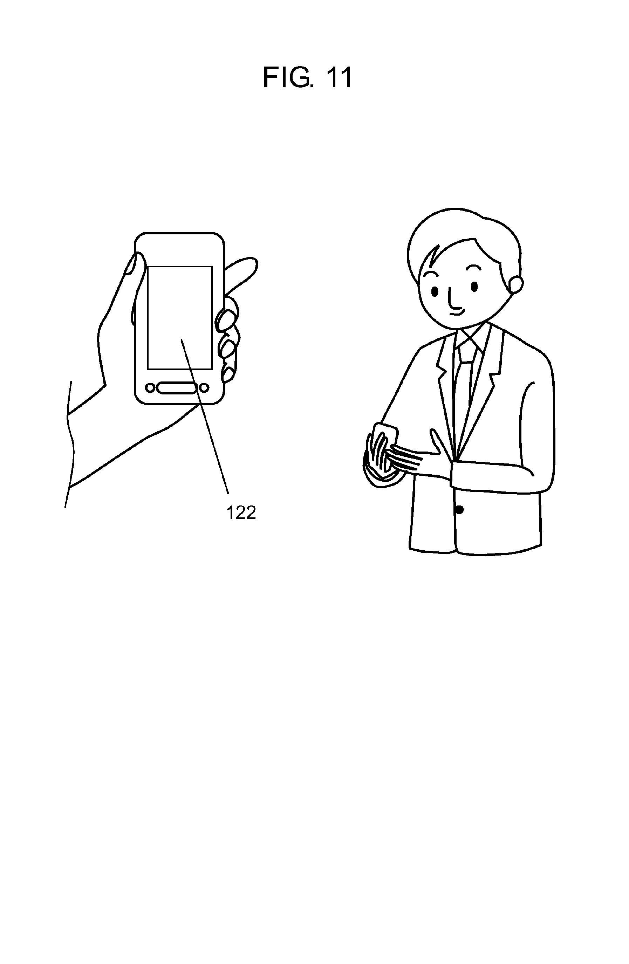

Fig. 11 is a diagram illustrating a manner in which a typical user holds mobile terminal 122 in the second embodiment of the present invention.

In recent years, smart phones have become popular, and the size of mobile terminal 122 has become larger. Accordingly, a general way of holding mobile terminal 122 is to put it on the palm. In this case, since the usage pattern is such that the palm or fingers come to the rear side of mobile terminal 122, in a case of the proximity communication, a part of the hand comes in between RFID tag 121 side of refrigerator 200 and mobile terminal 122. Therefore, in RFID tag 121 side, if the surface on which RFID tag 121 is disposed is made to be a convex portion, and the area is made to be smaller than the area of the rear side of mobile terminal 122, without being interrupted by fingers, the transmission and receiving becomes easy, and the contact with other parts is also reduced.

Next, a configuration for displaying the data such as the frequency of the door opening and closing data of refrigerator 200 on display unit 139 of mobile terminal 122 will be described.

Fig. 12 is a functional block diagram illustrating configurations of refrigerator 200 and a control unit of mobile terminal 122 in the second embodiment of the present invention.

As illustrated in Fig. 12, refrigerator 200 includes door opening and closing detection unit 125, counter unit 126, frequency storage unit 127, timer unit 128, time storage unit 129, RFID tag 121, data request detection unit 131, and antenna 130.

Counter unit 126 counts the frequency of the door opening and closing detected by door opening and closing detection unit 125. Frequency storage unit 127 stores the frequency of the door opening and closing counted by counter unit 126.

Timer unit 128 measures the door opening time when the door is open and closed, detected by door opening and closing detection unit 125.

Time storage unit 129 accumulates and stores the door opening time measured by timer unit 128.

RFID tag 121 functions as an output unit of the frequency of the door opening and closing data stored in frequency storage unit 127 and the accumulated door opening time data stored in time storage unit 129, and is formed of an IC chip integrated with antenna 130.

When mobile terminal 122 approaches and requests the data, data request detection unit 131 detects the data. RFID tag 121 itself includes data request detection unit 131, and when data request detection unit 131 detects a data request, data request detection unit 131 supplies power to RFID tag 121 and causes RFID tag 121 to operate.

Therefore, when mobile terminal 122 approaches and requests the data, RFID tag 121 is brought into the operation state by data request detection unit 131, and transmits the recent frequency of the door opening and closing data and the accumulated door opening time data stored in frequency storage unit 127 and time storage unit 129 respectively, to the outside via antenna 130.

Next, in the present embodiment, a typical mobile phone is used as mobile terminal 122, and mobile terminal 122 includes first communication unit 132, antenna 133 of first communication unit 132, second communication unit 134, antenna 134a of second communication unit 134, display unit 139, operation unit 140, storage unit 141, and control unit 138. Control unit 138 includes first communication control unit 135, second communication control unit 136, and display control unit 137.

First communication unit 132 performs proximity communication. Second communication unit 134 is a communication unit for voice calls and internet communication.

First communication control unit 135 controls first communication unit 132. Second communication control unit 136 controls second communication unit 134.

Display unit 139 is formed of a liquid crystal display, or the like. Display control unit 137 controls the displaying of display unit 139. Operation unit 140 is formed of a touch switch, or the like.

By the user's operation of operation unit 140, when mobile terminal 122 is switched to the proximity communication by first communication control unit 135, mobile terminal 122 transmits the data request signal to the opposite party and is brought into the state of receiving the data from the opposite party. In association with this, display control unit 137 switches the display of display unit 139, and then displays the data received by first communication unit 132 on display unit 139. Accordingly, by the user causing antenna 133 of first communication unit 132 to be close to RFID tag 121 of refrigerator 200, mobile terminal 122 can receive the frequency of the door opening and closing data, or the like from RFID tag 121, and can display the data on display unit 139.

Various means can be used as the proximity communication means between mobile terminal 122 and RFID tag 121, and any of infrared communication, a wireless LAN, or Bluetooth (registered trademark) can be used. Considering the situation that a commercial mobile phone or a smart phone is used, it is preferable to use the proximity communication means that is used at the time when data such as telephone numbers is exchanged by the mobile phones and the smart phones, and this method is adopted in the present embodiment.

Next, in the configuration described above, the operation thereof will be described.

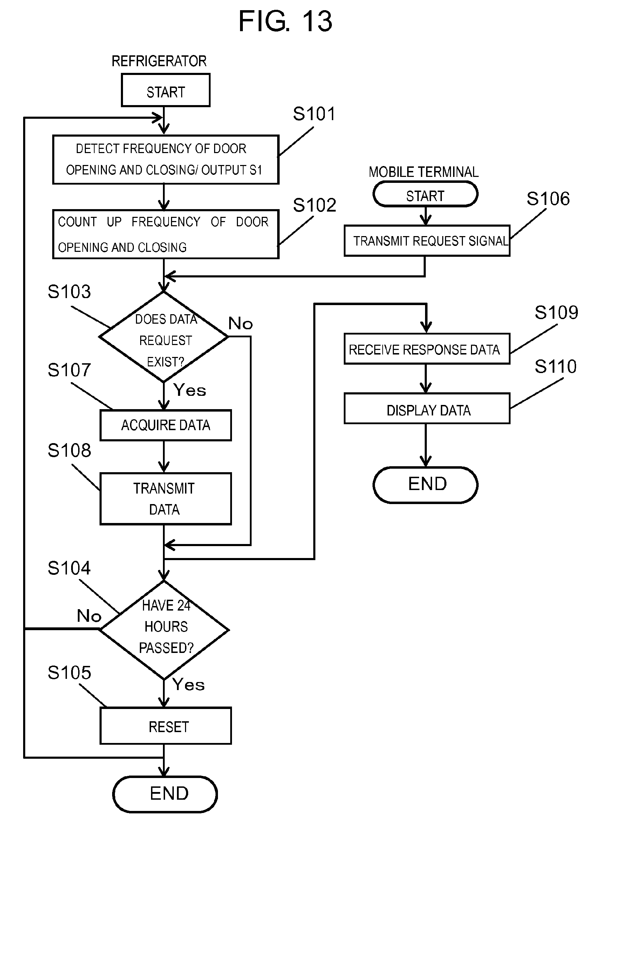

Fig. 13 is a flow chart explaining an operation of the refrigerator 200 and mobile terminal 122 in the second embodiment of the present invention.

First, it is assumed that the user opens the door of refrigerator 200, for example, right side door 111b of refrigerating room 102 in order to take food in or out. At this time, door opening and closing detection unit 125 detects the opening and closing of the door, and outputs signal S1 to counter unit 126 (S101).

Counter unit 126, receiving signal S1, adds the increment "+1" to the counted number which is the frequency of the door opening and closing, and outputs the result to frequency storage unit 127 (S102).

Data request detection unit 131 checks whether or not there is a data request from mobile terminal 122 (S103).

If there is no data request in STEP S103 (No in S103), counter unit 126 of refrigerator 200 checks whether or not a predetermined time, for example, one day (24 hours) has passed from the start of counting (S104).

In STEP S104, if one day has not passed (No in S104), the process returns to STEP S101. On the other hand, in STEP S104, if one day has passed (Yes in S104), the frequency of the door opening and closing stored in frequency storage unit 127 up to now is reset (S105), and the process returns to STEP S101.

In the state in which refrigerator 200 performs the above control, the user causes antenna 133 portion of mobile terminal 122 to closely approach RFID tag 121 on the refrigerator door, and then, first communication unit 132 transmits the data request signal (S106). Then, data request detection unit 131 of refrigerator 200 detects the data request (Yes in S103), and RFID tag 121 starts the operation and acquires the frequency of the door opening and closing and the accumulated door opening time data stored in frequency storage unit 127 and time storage unit 129 respectively (S107), and the data is transmitted via antenna 130 (S108). Mobile terminal 122 receives the data (S109) and displays the data on display unit 139 (S110).

As described above, in refrigerator 200 in the present embodiment, the user causes mobile terminal 122 to closely and directly approach target refrigerator 200 itself to acquire the data. Accordingly, if there is a plurality of refrigerators 200, at the time of performing the communication, the user brings mobile terminal 122 so as to certainly touch target refrigerator 200. In this way, it is possible to provide the system, in which even children can intuitively understand the target appliance without misunderstanding, and can safely use the appliance without any hesitation in operation, and which can be easily used. In addition, since the data is directly transmitted and received to and from target refrigerator 200 and mobile terminal 122 without intervention of the internet, it is possible to improve the safety without occurrence of a security problem.

The user can ascertain the frequency of the door opening and closing and the accumulated door opening time by viewing display unit 139 of mobile terminal 122. In this way, for example, when the displayed frequency of the door opening and closing or the accumulated door opening time are large, since the user may be careful so as to reduce the frequency of the door opening and closing thereafter, power saving can be promoted.

In addition, in refrigerator 200 side, since the display device can be removed, or even if the display device is still provided, when the frequency of the door opening and closing, or the like reaches a predetermined number, it is sufficient to display only to notify that fact, therefore, it is possible to suppress the power consumption of refrigerator 200 itself.

In the present embodiment, since the display device of refrigerator 200 side, which notifies the user of the frequency of the door opening and closing, or the like is removed, and the display power for notifying the user of the frequency of the door opening and closing and accumulated door opening time is not necessary, it is possible to save that much power, and to improve the energy conservation of refrigerator 200. That is, in refrigerator 200, since the frequency of the door opening and closing and the accumulated door opening time can be ascertained via display unit 139 of mobile terminal 122, and it is not necessary to provide the display unit for displaying the frequency of the door opening and closing and the accumulated door opening time in refrigerator 200 itself. Accordingly, refrigerator 200 absolutely does not consume the display power for the user education, and it is possible to promote that much energy conservation.

Furthermore, in the present embodiment, data request detection unit 131 is provided at refrigerator 200 side. Only in a case where data request detection unit 131 detects that the data is requested, power is supplied to RFID tag 121 and RFID tag 121 transmits the data. In this way, power is not consumed by RFID tag 121 when the data is not requested, and it is possible to achieve that much power conservation.

In addition, in refrigerator 200 in the present embodiment, RFID tag 121 is provided on the most convex portion of the door surface.

In this way, even in a case where there are a plurality of target home appliances, at the time of performing the communication, since the user brings mobile terminal 122 to the periphery of an appliance by the operation of touching the target home appliance body, even children or the elderly can intuitively understand the target without misunderstanding, and can safely use the home appliance without any hesitation in operation, and thus, it is easy to use. In addition, since the data is directly transmitted and received to and from the home appliance and mobile terminal 122 without intervention of the internet, it is possible to improve the safety without occurrence of a security problem. In addition, mobile terminal 122 can approach closer to or contact RFID tag 121, and it is possible to secure reliable communication performance. In addition, it is possible to maintain a good external appearance of the door for a long time without damaging the external appearance of the door in the peripheral edge of RFID tag 121 by mobile terminal 122.

By providing RFID tag 121 at the most convex portion, a space for releasing the hand is generated when mobile terminal 122 approaches while being grasped, the degree of concern about mobile terminal 122 being in contact with the door surface can be reduced and it becomes easy to cause mobile terminal 122 to approach parallel to RFID tag 121. The communication performance between mobile terminal 122 and RFID tag 121 increases by as much as these are in a state of being parallel each other, that is, by as much as these approach directly facing each other. Therefore, parallel approach is important for securing the communication performance.

In addition, in a case where a mobile phone is mobile terminal 122, the user usually grasps the long side portion of the mobile phone and grabs across the short side. According to the articulated structure of the human body, it is difficult to cause mobile terminal 122 to vertically closely approach RFID tag 121, and it is an easy operation to cause horizontally or diagonally close approach to RFID tag 121. By causing mobile terminal 122 to closely approach RFID tag 121 by such an easy operation, it becomes easy to cause mobile terminal 122 to closely approach parallel to RFID tag 121.

The size of RFID tag 121 in at least any one direction of vertical or horizontal directions, but both directions in the present embodiment, as is apparent in Fig. 7, is set to be shorter than the size of long side direction of mobile terminal 122. The user usually grasps the short side of mobile terminal 122 when holding mobile terminal 122. When mobile terminal 122 approaches RFID tag 121 in this state, it is possible to avoid the phenomenon that the user's fingers on the door side gasping mobile terminal 122 are brought into contact with RFID tag 121, and thus, mobile terminal 122 cannot sufficiently approach or is not in contact with RFID tag 121. Therefore, it is possible to cause mobile terminal 122 to certainly approach or to be in contact with RFID tag 121, and thus, an excellent communication performance can be secured.

In addition, RFID tag 121, as illustrated in Fig. 9, has a configuration of protruding from the surface of the door within the range in which the width of RFID tag 121 is smaller than the width of the communication part of mobile terminal 122, even when mobile terminal 122 approaches with a slight deviation, mobile terminal 122 and RFID tag 121 are certainly facing each other, and thus, the communication performance is excellently secured and reliability can be improved.

In this way, according to refrigerator 200 in the present embodiment, by providing RFID tag 121 on the large vertical surface, even in a state in which the sense of distance is hard to get when mobile terminal 122 approaches, mobile terminal 122 can closely approach or be brought into contact with RFID tag 121 without damaging the door surface, and thus, it is possible to realize securing of reliable communication performance and prevention of damage to the door surface.

In refrigerator 200 in the present embodiment, RFID tag 121 is provided on door 111 of refrigerating room 102 of refrigerator 200, that is, door 111 that opens and closes the uppermost refrigerating room 102 among a plurality of storage rooms. In this way, such failures as in the case of providing RFID tag 121 on the doors located at the lower part are less likely to occur. That is, there is not such a failure in which the cooling air leaking and sinking when the door above the door on which RFID tag 121 is provided is opened touches RFID tag 121, and condensation occurs on the surface of RFID tag 121, and thus, the communication state deteriorates and the component reliability decreases.

In addition, RFID tag 121 is provided in a range of a height of 900 mm or higher and 1500 mm or lower from the bottom of refrigerator body 101. For this reason, a typical user, for example, a housewife can cause mobile terminal 122 to closely approach RFID tag 121 without adopting an excessive posture such as leaning down. Moreover, at that time, the user can cause mobile terminal 122 to closely approach RFID tag 121 while visibly recognizing display unit 139 of mobile terminal 122. Therefore, it is possible to improve the usability.

In addition, RFID tag 121 is provided on door 111 corresponding to refrigerating room 102 among a plurality of storage rooms. Since the temperature in refrigerating room 102 is higher than that in ice making room 103 or freezing room 105, it is possible to suppress the influence of the cooling air in the room on RFID tag 121 to be small. Therefore, since the difference in temperature between the surface and the inner portion of RFID tag 121 is suppressed to be small, and the occurrence of condensation can be suppressed, it is possible to reduce the failure such as the deterioration of the communication state and the decrease of the component reliability.

Furthermore, RFID tag 121 is incorporated into operation unit 118 provided at the end portion of right side door 111b. In a case where the user performs the pasting of the sticker, or the like, on door 111b, in many cases the sticker is affixed at the center portion of door 111b, and a case where the sticker covers the surface of RFID tag 121 located at the end portion of door 111b is less. Therefore, the user can directly cause mobile terminal 122 to closely face RFID tag 121. In this way, the erroneous transmission and receiving of the data due to the approaching of mobile terminal 122 over the sticker can be reduced, and the user does not need to perform the action for dispelling the sticker covered by RFID tag 121 surface and causing mobile terminal 122 to closely approach RFID tag 121, and thus, it is possible to secure reliable communication performance and to improve the usability.

In addition, since RFID tag 121 is provided on right side door 111b of refrigerating room 102 among double-door type doors 111, it is possible to reduce the occurrence of the failure in RFID tag 121 due to the cooling air in the refrigerating room. Generally, there are many right-handed users and the frequency of the opening and closing of right side door 111b by right-handed users is high. However, in a case where right side door 111b is opened and the cooling air in the refrigerating room leaks out, there is a high possibility that the cooling air diffuses in the surface of left side door 111a at the opposite side to right side door 111b, and thus, the possibility that the cooling air goes around into the surface side of right side door 111b (RFID tag 121 installed side) which is the rear side seen from the leaked cooling air, is very low. Therefore, there is almost no possibility that the cooling air touches RFID tag 121 provided on right side door 111b, and it is possible to suppress the failure such as the deterioration of the communication state and the decrease of the component reliability due to condensation occurring on the surface of RFID tag 121.

In addition, on door 111b on which RFID tag 121 is provided, there are provided a wiring to operation unit 118 and a wiring through which the door opening and closing data from frequency storage unit 127 in the control unit of refrigerator 200 or from time storage unit 129 is transmitted. However, both of these are DC wirings and an AC wiring is not provided on door 111b. Accordingly, the influence of noise occurring due to the AC wiring does not interfere with the transmission of RFID tag 121, and thus, it is possible to secure accurate and reliable communication performance.

Furthermore, on right side door 111b of refrigerating room 102, on which RFID tag 121 is provided, automatic door opening and closing mechanism 117 is provided. In this way, even if a hand of a user working in the kitchen is wet with water, it is possible to reduce the occurrence of the failure of RFID tag 121 due to the water. That is, since the user only slightly touches door 111b, the amount of water drops attached to the surface of door 111b is extremely small or the water drops do not attach when opening and closing the door. Accordingly, it is possible to prevent, when mobile terminal 122 is close to RFID tag 121, the water drops attached to the surface of door 111b from being attached to RFID tag 121 itself or mobile terminal 122 which is close to RFID tag 121, and then wetting or contaminating RFID tag 121 or mobile terminal 122, and thus, it is possible to reduce the failure such as the deterioration of the communication state and the decrease of the component reliability.

Furthermore, RFID tag 121 is disposed at the position separated from handle portions 116 respectively provided on a plurality of doors 111 to 115 and a position higher than handle portion 116. In this way, when opening doors 111 to 115 with a wet hand, even though water drops may be attached to handle portion 116 and the water drops attached to handle portion 116 may spread to the right and left side or drop down, the water drops do not reach the position where RFID tag 121 is disposed. Accordingly, as described before, even if mobile terminal 122 is brought to be close to RFID tag 121, it is possible to prevent RFID tag 121 itself or mobile terminal 122 which is close to RFID tag 121 from becoming wet or contaminated by the water drops attached to the surface of handle portion 116 of doors 111 to 115, and thus, it is possible to reduce the failure such as the deterioration of the communication state and the decrease of the component reliability.

Here, another configuration of refrigerator 200 in the present embodiment will be described.

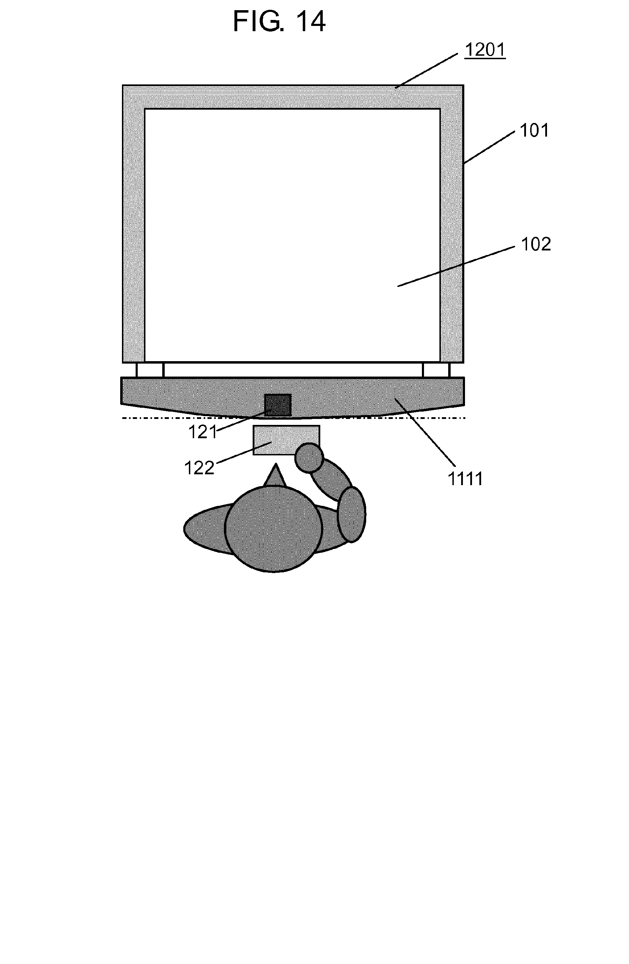

Fig. 14 is a sectional view illustrating another example of a schematic configuration of refrigerator 1201 in the second embodiment of the present invention seen from the top.

In refrigerator 1201 in Fig. 14, a case in which door 1111 on which RFID tag 121 is provided is not a pair of double-door type doors, but a single-door, is illustrated. In this case, the surface of door 1111 is formed as a round surface, and RFID tag 121 is provided on the most convex portion of the round surface.

According to this configuration, it is possible to make the configuration in which RFID tag 121 is most protruded without using components on the surface for elevating RFID tag 121 up from the surface of door 1111. In addition, in the peripheral portion of RFID 121, since the surface of door 1111 is retreated as the round shape, even when mobile terminal 122 approaches with a slight inclination, it is possible to prevent the surface of door 1111 from being damaged.

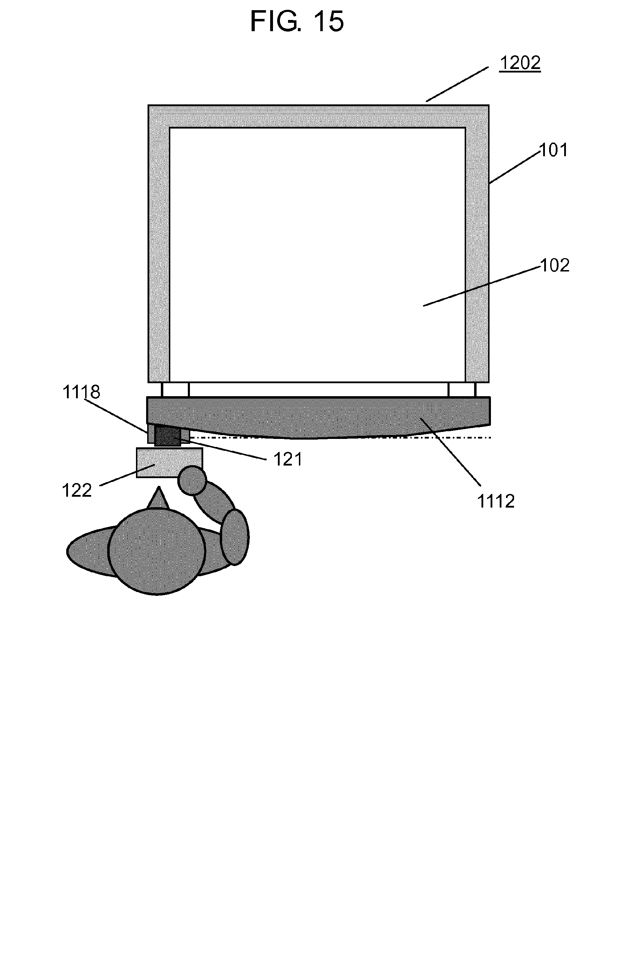

Fig. 15 is a sectional view illustrating still another example of a schematic configuration of refrigerator 1202 in the second embodiment of the present invention seen from the top.

In refrigerator 1202 in Fig. 15, in a case where door 1112 is a single-door type door with RFID tag 121, as is clearly seen based on the dashed line, RFID tag 121 is provided at a position offset from the RFID tag disposal surface (the disposal surface when RFID tag 121 is disposed at the center portion) in the convex direction. In refrigerator 1202, at the end portion of door 1112, operation unit 118 is provided so as to be offset in the convex direction, and RFID tag 121 is incorporated into operation unit 1118 as illustrated in Fig. 15.

According to this configuration, RFID tag 121 is disposed so as to certainly protrude from the surface of door 1112, it is possible to minimize the approaching distance to mobile terminal 122 or to be in contact with mobile terminal 122. Therefore, reliable communication performance can be secured, and it is possible to improve the reliability and to certainly prevent the surface of door 1112 in the vicinity portion of RFID tag 121 from being damaged.

In refrigerator 1202, operation unit 1118 is provided to be offset in the convex direction, and RFID tag 121 is incorporated into operation unit 1118. Accordingly, in making RFID tag 121 to be installed so as to protrude, it is possible to reasonably install RFID tag 121 in the protruded state using operation unit 1118, and to simplify the configuration without use of any dedicated members being needed.

As described above, according to refrigerators 200, 1201, and 1202 described in the present embodiment, the usability and the safety can be improved. However, refrigerators 200, 1201, and 1202 described in the present embodiment are some aspects for realizing the present invention, and various modifications can be made within the objective scope of the present invention.

For example, in the present embodiment described above, the data items provided to the user is both of the frequency of the door opening and closing and the accumulated door opening time for the power saving education. However, the data items may be any one of the above. In addition, any other data may be provided.

In addition, RFID tag 121 is described as having only a transmission function. However, RFID tag 121 having a receiving function may be used. For example, an application can be adopted, in which set temperature data may be transmitted from mobile terminal 122 side to RFID tag 121 such that the temperature in refrigerators 200, 1201, and 1202 sides can be set, or the frequency of the door opening and closing data and the accumulated door opening time data from the control unit of refrigerators 200, 1201, and 1202 may be received via short distance communication rather than via the wiring.

Furthermore, in a case where RFID tag 121 has the transmission and receiving function, by providing the transmission and receiving unit at refrigerator body 101 side also corresponding to RFID tag 121 provided on the door, when the door is opened, RFID tag 121 at refrigerator body 101 side may detect the opening, that is, RFID tag 121 on the door may also serve as door opening and closing detection unit 125. In this way, it is possible to simplify the configuration. While it is preferable that door opening and closing detection unit 125 be also provided corresponding to all the doors, door opening and closing detection unit 125 may however be provided on a proportion of doors, for example, one or two doors of which the frequency of opening and closing is high.

Furthermore, even though it is not described in the present embodiment, the frequency of the door opening and closing and the accumulated door opening and closing time can be checked outside of the home, for example, by a personal computer at the company using the internet line via second communication unit 134 of mobile terminal 122. According to this configuration, it is possible to notify children or a grandfather at home to pay attention to reducing the frequency of opening and closing the door of refrigerators 200, 1201, and 1202.

Regarding the communication method, as long as the information can be transmitted or received with the target being limited by the operation of touching or holding the product, other short distance communication methods can be used.

### (Third embodiment)

Next, a third embodiment of the present invention will be described.

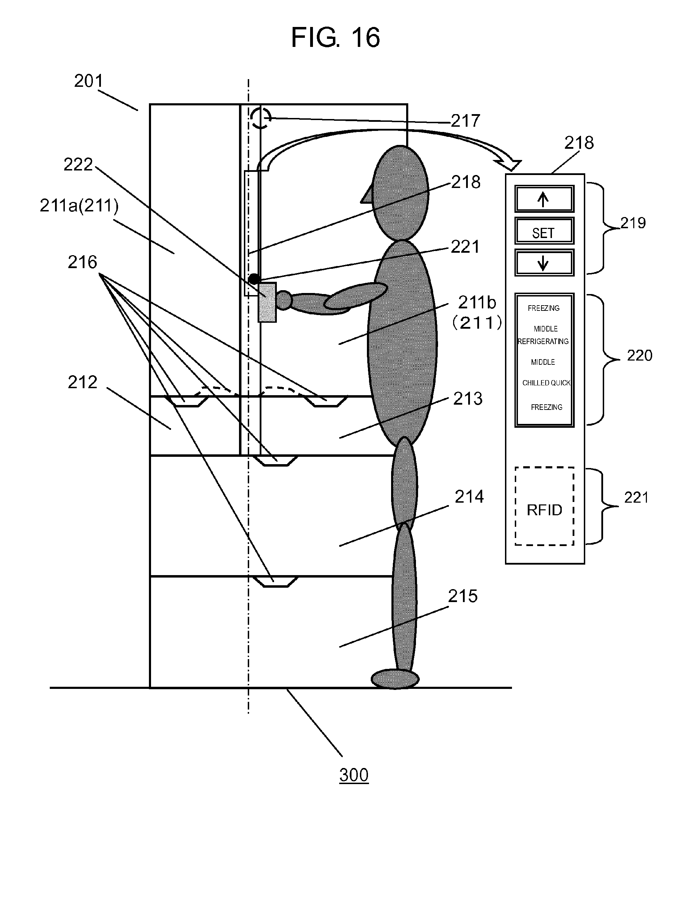

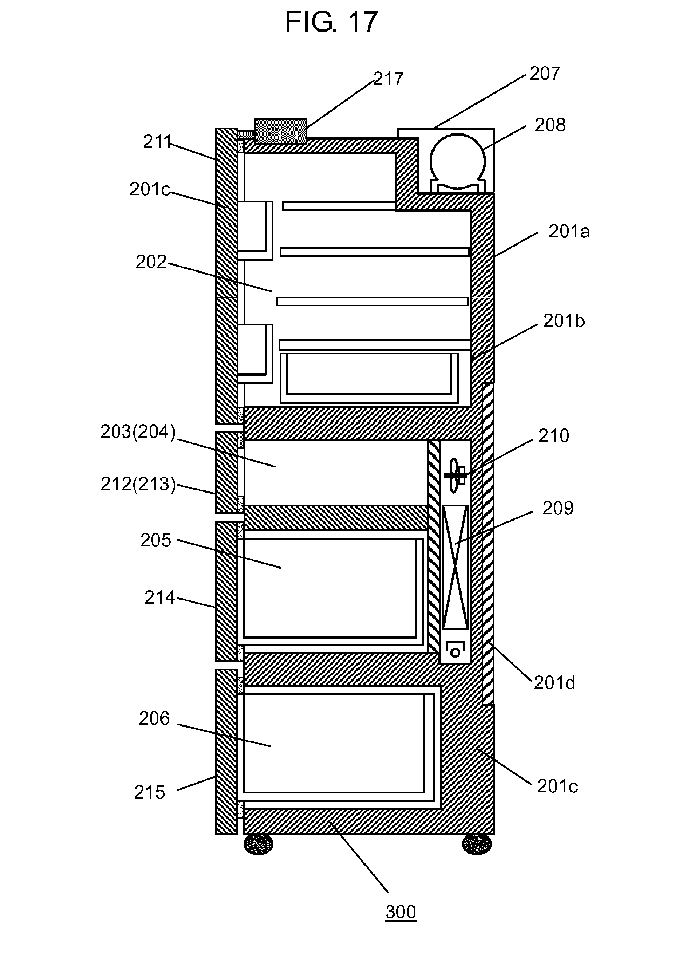

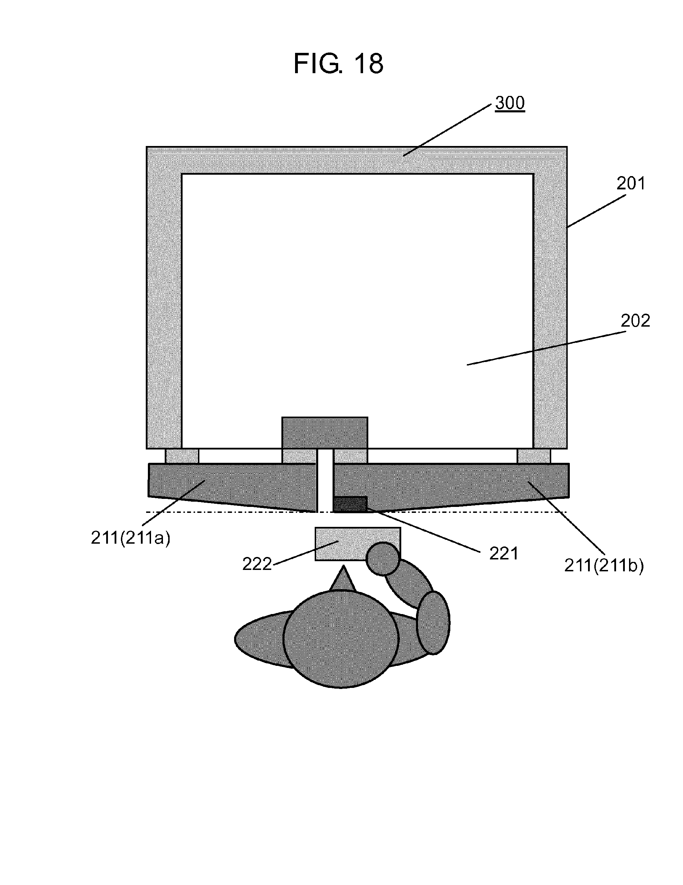

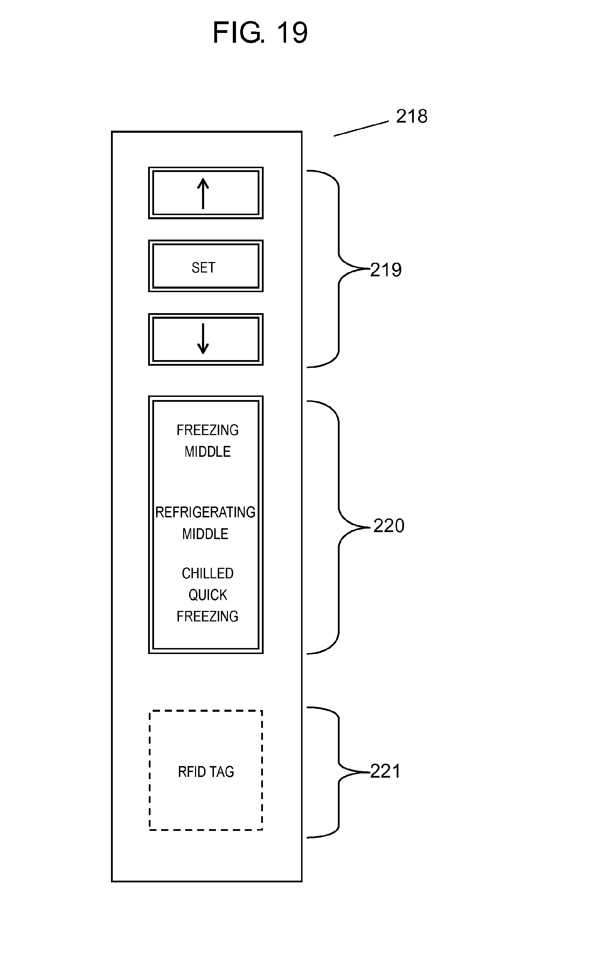

Fig. 16 is a front view illustrating a status of using refrigerator 300 in a third embodiment of the present invention, Fig. 17 is a sectional view illustrating a schematic configuration of refrigerator 300 seen from the side, Fig. 18 is a sectional view illustrating a schematic configuration of refrigerator 300 seen from the top, and Fig. 19 is a front view illustrating a configuration of operation unit 218 of refrigerator 300.

Refrigerator 300 includes refrigerator body 201 and a plurality of storage rooms. The plurality of storage rooms are configured to include, refrigerating room 202, ice making room 203 and temperature switching room 204 positioned at the side of ice making room 203, freezing room 205, and vegetable room 206 in an order from the top. The layout can appropriately be changed, if necessary. A temperature in temperature switching room 204 can be switched, for example, to be in a range from approximately -18°C which is a temperature in freezing room 205 to approximately 6°C which is a temperature in vegetable room 206.

Refrigerator body 201 is configured to include outer box 201a in which an iron plate is mainly used, inner box 201b molded by resin such as ABS, and rigid polyurethane foam 201c filled into and foamed in a space between outer box 201a and inner box 201b. In refrigerator body 201, in order to improve heat insulation, vacuum heat insulating material 201d is partially buried in rigid polyurethane foam 201c, if necessary. For example, in the example illustrated in Fig. 17, vacuum heat insulating material 201d is affixed in the space of the rear surface portion corresponding to ice making room 203, temperature switching room 204, and freezing room 205, and thus, becomes a complex with rigid polyurethane foam 201c.

The top surface portion of refrigerator body 201 has a shape having a step-shaped recess toward the rear surface direction of refrigerator 300. In the step-shaped recess, machine room 207 is formed, and in machine room 207, compressor 208 and components for a high-pressure side of a freezing cycle such as a dryer for water removal, and a refrigerator control unit, are accommodated. In this way, the storage capacity of vegetable room 206 at the bottom can be expanded.

On the other hand, regarding cooler 209 that configures a low pressure side of the freezing cycle, a plurality of storage rooms are cooled by cooling air generated in cooler 209 being forcedly blown by cooling fan 210 disposed at the rear side of freezing room 205.

Refrigerating room 202, ice making room 203, temperature switching room 204, freezing room 205, and vegetable room 206 are configured so as to be opened and closed by doors 211 to 215 which are provided respectively corresponding thereto. Each of the plurality of doors 211 to 215 has handle portion 216. In addition, each of the plurality of doors 211 to 215, similarly to refrigerator body 201, is formed by rigid polyurethane foam 201c being filled into and foamed in the inner portion sealed by the metal material of the outer surface and the resin material such as ABS of the inner surface. In a part of the outer surface of door 211, a substrate storage portion formed of the resin material is disposed, and inside the substrate cover, operation unit 218 having RFID tag 221 is disposed. By covering RFID tag 221 with the resin material, it is possible to prevent the electric transmission from being influenced by the metal.

The outer surface of door 211 may be formed of a glass material instead of the metal, and by disposing operation unit 218 close to inside the glass, it is also possible to prevent the electric transmission from being influenced by the metal material.

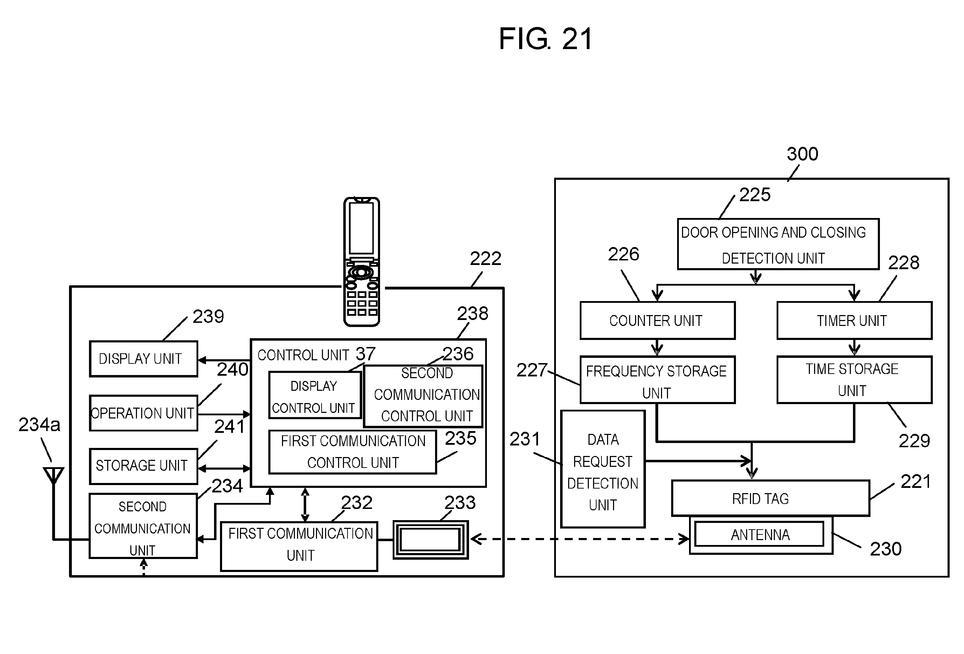

Door opening and closing detection unit 225 (refer to Fig. 21) is provided in each of the plurality of doors 211 to 215, and the frequency of the door opening and closing data and accumulated door opening time data are processed in the control unit of refrigerator 300.

In refrigerator 300 in the present embodiment, door 211 of uppermost refrigerating room 202 is a pair of double-door type doors, and is configured to include doors 211a and 211b having different areas from each other disposed at the right and left of refrigerating room 202. An abutting surface portion of right and left side doors 211a and 211b are formed in a convex shape protruding to the nearest side to the user. At the convex shaped portion, for example, at the end portion of right side door 211b, operation unit 218 is provided in the vertical direction, and a DC wiring for the power supply to operation unit 218 or for the transmission of the control signal is disposed. On the other hand, an AC wiring is disposed at left side door 211a, not right side door 211b. Right side door 211b is configured so as to be opened by only slightly pressing door surface by automatic door opening and closing mechanism 217, and the opening and closing of the door is detected by door opening and closing detection unit 225.

Operation unit 218, as illustrated in Fig. 19, includes setting switch 219 which is an electrostatic touch typed operation unit for performing the temperature setting of the plurality of storage rooms and setting status display unit 220 disposed at the lower portion of setting switch 219. In addition, in the example in Fig. 19, RFID tag 221 that outputs and transmits at least any of the frequency of the door opening and closing data and the accumulated door opening time data is provided on operation unit 218.

RFID tag 221 is provided in a range of a height of 900 mm or higher and 1500 mm or lower from the bottom of refrigerator body 201. RFID tag 221 is provided at a position lower than setting switch 219 and setting status display unit 220. As illustrated in Figs. 16 and 18, when the user causes his mobile terminal 222 such as a mobile phone, a smart phone, or a PDA to approach RFID tag 221 of refrigerator 300, the data received from refrigerator 300 is displayed on display unit 239 (refer to Fig. 21) of mobile terminal 222.

In the present embodiment, RFID tag 221 of a passive tag type and a proximity type having a communication distance of 100 mm or less is used.

In addition, in RFID tag 221, an ID number with which the product can be identified is registered, and the individual product is identified by the transmission and receiving of the ID number.

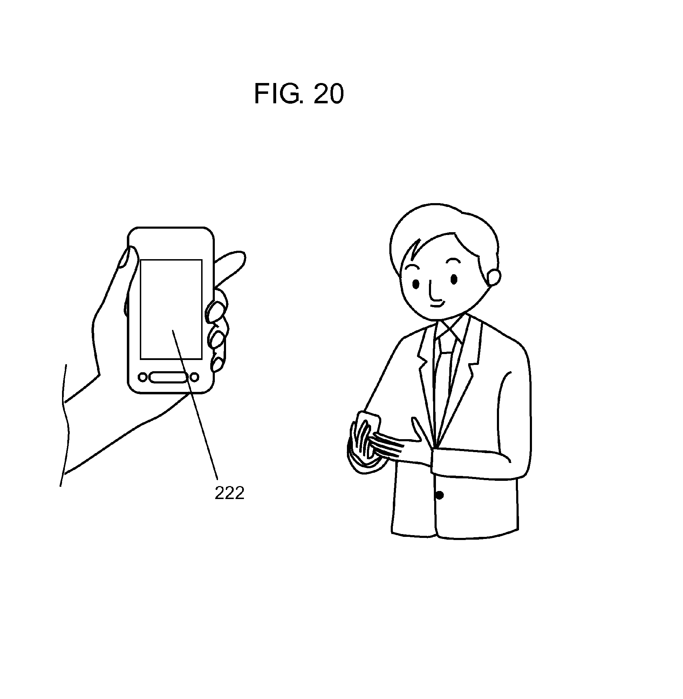

Fig. 20 is a diagram illustrating a manner in which a typical user holds mobile terminal 222 in the third embodiment of the present invention.

In recent years, smart phones have become popular, and the size of mobile terminal 222 has become larger. Accordingly, a general way of holding mobile terminal 222 is to put it on the palm. In this case, since the usage pattern is such that the palm or fingers come to the rear side of the mobile terminal, in a case of the proximity communication, a part of the hand comes in between RFID tag 221 side of refrigerator 300 and mobile terminal 222. Therefore, in RFID tag 221 side, if the surface on which RFID tag 221 is disposed is made to be a convex portion, and the area is made to be smaller than the area of the rear side of mobile terminal 222, without being interrupted by fingers, the transmission and receiving becomes easy, and the contact with other parts is also reduced.

Next, a configuration for displaying the data such as the frequency of the door opening and closing data of refrigerator 300 on display unit 239 of mobile terminal 222 will be described.

Fig. 21 is a functional block diagram illustrating a configuration of refrigerator 300 and a control unit of mobile terminal 222 in the third embodiment of the present invention.

As illustrated in Fig. 21, refrigerator 300 includes door opening and closing detection unit 225, counter unit 226, frequency storage unit 227, timer unit 228, time storage unit 229, RFID tag 221, data request detection unit 231, and antenna 230.

Counter unit 226 counts the frequency of the door opening and closing detected by door opening and closing detection unit 225. Frequency storage unit 227 stores the frequency of the door opening and closing counted by counter unit 226.

Timer unit 228 measures the door opening time when the door is open and closed detected by door opening and closing detection unit 225.

Time storage unit 229 accumulates and stores the door opening time measured by timer unit 228.

RFID tag 221 functions as an output unit of the frequency of the door opening and closing data stored in frequency storage unit 227 and the accumulated door opening time data stored in time storage unit 229, and is formed of an IC chip integrated with antenna 230.

When mobile terminal 222 approaches and requests the data, data request detection unit 231 detects the request. RFID tag 221 itself includes data request detection unit 231, and when data request detection unit 231 detects a data request, data request detection unit 231 supplies power to RFID tag 221 and causes RFID tag 221 to operate.

Therefore, when mobile terminal 222 approaches and requests the data, RFID tag 221 is brought into the operation state by data request detection unit 231, and transmits the recent frequency of the door opening and closing data and the accumulated door opening time data stored in frequency storage unit 227 and time storage unit 229 respectively, to the outside via antenna 230.

Next, in the present embodiment, a typical mobile phone is used as mobile terminal 222, and mobile terminal 222 includes first communication unit 232, antenna 233 of first communication unit 232, second communication unit 234, antenna 234a of second communication unit 234, display unit 239, operation unit 240, storage unit 241, and control unit 238. The control unit 238 includes first communication control unit 235, second communication control unit 236, and display control unit 237.

First communication unit 232 performs proximity communication. Second communication unit 234 is a communication unit for voice calls and Internet communication.

First communication control unit 235 controls first communication unit 232. Second communication control unit 236 controls second communication unit 234.

Display unit 239 is formed of a liquid crystal display or the like. Display control unit 237 controls the displaying of display unit 239. Operation unit 240 is formed of a touch switch, or the like.

By the user's operation of operation unit 240, when mobile terminal 222 is switched to the proximity communication by first communication control unit 235, mobile terminal 222 transmits the data request signal to the opposite party and is brought into the state of receiving the data from the opposite party. In association with this, display control unit 237 switches the display of display unit 239, and then displays the data received by first communication unit 232 on display unit 239. Accordingly, by the user causing antenna 233 of first communication unit 232 to be close to RFID tag 221 of refrigerator 300, mobile terminal 222 can receive the frequency of the door opening and closing data or the like from RFID tag 221, and can display the data on display unit 239.

Various means can be used as the proximity communication means between mobile terminal 122 and RFID tag 221, and any of infrared communication, a wireless LAN, or Bluetooth (registered trademark) can be used. Considering the situation that a commercial mobile phone or a smart phone is used, it is preferable to use the proximity communication means that is used at the time when data such as telephone numbers is exchanged by the mobile phones and the smart phones, and this method is adopted in the present embodiment.

Next, in the configuration described above, the operation thereof will be described.

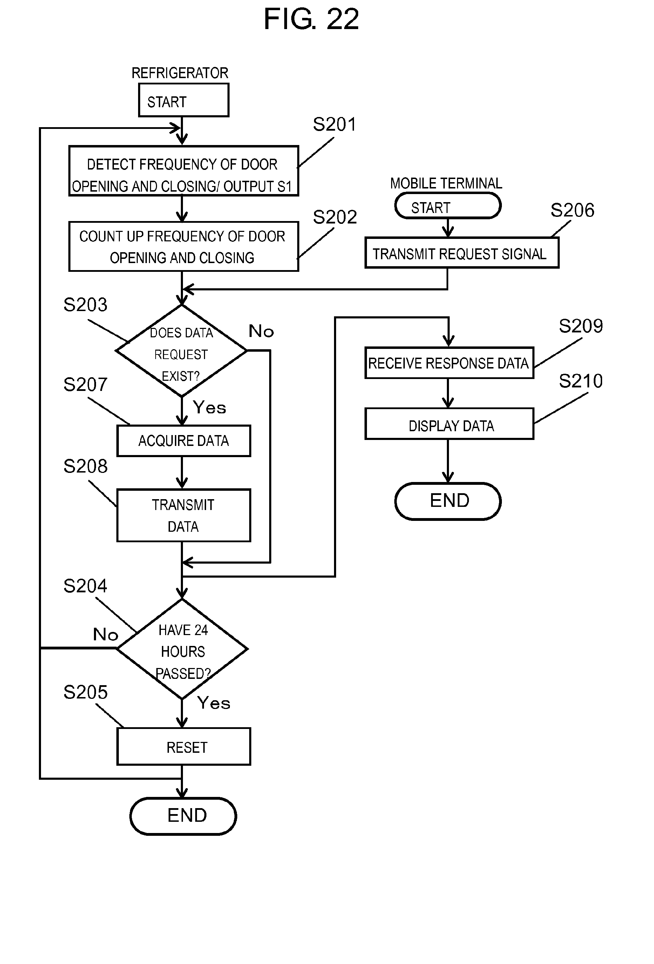

Fig. 22 is a flow chart explaining an operation of refrigerator 300 and mobile terminal 222 in the third embodiment of the present invention.

First, it is assumed that the user opens the door of refrigerator 300, for example, right side door 211b of refrigerating room 202 in order to take food in or out. At this time, door opening and closing detection unit 225 detects the opening and closing of the door, and outputs signal S1 to counter unit 226 (S201).

When receiving signal S1, counter unit 226 adds the increment "+1" to the counted number which is the frequency of the door opening and closing, and outputs the result to frequency storage unit 227 (S202).

Data request detection unit 131 checks whether or not there is a data request from mobile terminal 222 (S203).

If there is no data request in STEP S203 (No in S203), counter unit 226 of refrigerator 300 checks whether or not a predetermined time, for example, one day (24 hours) has passed from the start of counting (S204).

In STEP S204, if one day has not passed (No in S204), the process returns to STEP S201. On the other hand, in STEP S204, if one day has passed (Yes in S204), the frequency of the door opening and closing stored in frequency storage unit 227 up to now is reset (S205), and the process returns to STEP

S201.

In the state in which refrigerator 300 performs the above control, the user causes antenna 233 portion of mobile terminal 222 to closely approach RFID tag 221 on the refrigerator door, and then, first communication unit 232 transmits the data request signal (S206). Then, data request detection unit 231 of refrigerator 300 detects the data request (Yes in S203), and RFID tag 221 starts the operation and acquires the frequency of the door opening and closing and the accumulated door opening time data stored in frequency storage unit 227 and time storage unit 229 respectively (S207), and the data is transmitted via antenna 230 (S208). Mobile terminal 222 receives the data (S209) and displays the data on display unit 239 (S210).

As described above, in refrigerator 300 in the present embodiment, the user causes mobile terminal 222 to closely and directly approach target refrigerator 300 itself to acquire the data. Accordingly, if there is a plurality of refrigerators 300, at the time of performing the communication, the user brings mobile terminal 222 so as to certainly touch target refrigerator 300. In this way, it is possible to provide the system, in which even children can intuitively understand the target home appliance without misunderstanding, and can safely use the home appliance without any hesitation in operation, and which can be easily used. In addition, since the data is directly transmitted and received to and from target refrigerator 300 and mobile terminal 222 without intervention of the Internet, it is possible to improve the safety without occurrence of a security problem.

The user can ascertain the frequency of the door opening and closing and the accumulated door opening time by viewing display unit 239 of mobile terminal 222. In this way, for example, when the displayed frequency of the door opening and closing or the accumulated door opening time is large, since the user may be careful so as to reduce the frequency of the door opening and closing thereafter, power saving can be promoted.

In addition, in refrigerator 300 side, since the display device can be removed, or even if the display device is still provided, when the frequency of the door opening and closing, or the like reaches a predetermined number, it is sufficient to display only to notify that fact, it is possible to suppress the power consumption of refrigerator 300 itself.

In the present embodiment, since the display device of refrigerator 300, side which notifies the user of the frequency of the door opening and closing, or the like is removed, and the display power for notifying the user of the frequency of the door opening and closing and accumulated door opening time is not necessary, it is possible to save that much power, and to improve the energy conservation of refrigerator 300. That is, in refrigerator 300, the frequency of the door opening and closing and the accumulated door opening time can be ascertained via display unit 239 of mobile terminal 222, and it is not necessary to provide the display unit for displaying the frequency of the door opening and closing and the accumulated door opening time. Accordingly, refrigerator 300 absolutely does not consume the display power for the user education, and it is possible to promote that much energy conservation.

Furthermore, in the present embodiment, data request detection unit 231 is provided at refrigerator 300 side. Only in a case where data request detection unit 231 detects that the data is requested, power is supplied to RFID tag 221 and RFID tag 221 transmits the data. In this way, power is not consumed by RFID tag 221 when the data is not requested, and again it is possible to achieve that much power conservation.

In addition, in refrigerator 300 in the present embodiment, operation unit 218 is provided in the vertical direction, and RFID tag 221 is disposed at a position lower than at least one of setting status display unit 220 of operation unit 218 and setting switch 219. In this way, at least one of setting status display unit 220 and setting switch 219 is positioned at a position higher than RFID tag 221. Accordingly, it is possible to suppress the problem that, when mobile terminal 222 approaches or is operated to touch RFID tag 221, setting status display unit 220 or setting switch 219 is in the blind spot of the hand and mobile terminal 222, and thus, the display cannot be seen, or setting switch 219 is erroneously touched and setting switch 219 erroneously operates. Thus, the usability can be improved.

In a case where RFID tag 221 is provided at the bottom of operation unit 218 and is positioned at the position lower than setting status display unit 220 and setting switch 219, it is possible to certainly prevent both of setting status display unit 220 and setting switch 219 from being in the blind spot, and thus, the usability can be improved.

Furthermore, in operation unit 218, in a case where setting switch 219 is an electrostatic type touch switch and setting status display unit 220 is disposed between setting switch 219 and RFID tag 221, when mobile terminal 222 approaches or is operated to touch RFID tag 221, a case of electric discharge in setting switch 219 from mobile terminal 222 occurring due to the user's hand or via the hand and the erroneous operation occurring, can be eliminated. Thus, it is possible to improve the reliability.

In refrigerator 300 in the present embodiment, RFID tag 221 is provided on door 211 of refrigerating room 202 of refrigerator 300, that is, door 211 that opens and closes the uppermost refrigerating room 202 among a plurality of the storage rooms. In this way, such failures as in the case of providing RFID tag 221 on the doors located at the lower part are less likely to occur. That is, there is not such a failure in which the cooling air leaking and sinking when the door above the door on which RFID tag 221 is provided is opened touches RFID tag 221, and condensation occurs on the surface of RFID tag 221, and thus, the communication state deteriorates and the component reliability decreases.

In addition, RFID tag 221 is provided in a range of a height of 900 mm or higher and 1500 mm or lower from the bottom of refrigerator body 201. For this reason, a typical user, for example, a housewife can cause mobile terminal 222 to closely approach RFID tag 221 without adopting an excessive posture such as leaning down. Moreover, at that time, the user can cause mobile terminal 222 to closely approach RFID tag 221 while visibly recognizing display unit 239 of mobile terminal 222. Therefore, it is possible to improve the usability.

In addition, RFID tag 221 is provided on door 211 corresponding to refrigerating room 202 among a plurality of the storage rooms. Since the temperature in refrigerating room 202 is higher than the temperature in ice making room 203 or freezing room 205, it is possible to suppress the influence of the cooling air in the refrigerating room on RFID tag 221 to be small. Therefore, since the difference in temperature between the surface and the inner portion of RFID tag 221 is suppressed to be small, and the occurrence of condensation can be suppressed, it is possible to reduce the failure such as the deterioration of the communication state and the decrease of the component reliability.

Furthermore, RFID tag 221 is incorporated into operation unit 218 provided at the end portion of right side door 211b. In a case where the user performs the affixing of the sticker to door 211b, or the like, in many cases the sticker is affixed at the center portion of door 211b, and a case where the sticker covers the surface of RFID tag 221 located at the end portion of door 211b is less. Therefore, the user can directly cause mobile terminal 222 to closely face RFID tag 221. In this way, the erroneous transmission and receiving of the data due to the approaching of mobile terminal 222 over the sticker can be reduced, and the user does not need to perform the action for dispelling the sticker covered by RFID tag 221 surface and causing mobile terminal 222 to closely approach RFID tag 221, and thus, it is possible to secure reliable communication performance and to improve the usability.

In addition, since RFID tag 221 is provided on right side door 211b of refrigerating room 202 among the double-door type doors 211, it is possible to reduce the occurrence of the failure in RFID tag 221 due to the cooling air in the refrigerating room. Generally, there are many right-handed users and the frequency of the opening and closing of right side door 211b by right-handed users is high. However, in a case where right side door 211b is opened and the cooling air in the refrigerating room leaks out, there is a high possibility that the cooling air diffuses in the surface of left side door 211a at the opposite side to right side door 211b, and thus, the possibility that the cooling air goes around into the surface side of right side door 211b (RFID tag 121 installed side) which is the rear side seen from the leaked cooling air, is very low. Therefore, there is almost no possibility that the cooling air touches RFID tag 221 provided on right side door 211b, and it is possible to suppress the failure such as the deterioration of the communication state and the decrease of the component reliability due to condensation occurring on the surface of RFID tag 221.

In addition, on door 211b on which RFID tag 221 is provided, there are provided a wiring to operation unit 218 and a wiring through which the door opening and closing data from frequency storage unit 227 in the control unit of refrigerator 300 or from time storage unit 129 is transmitted. However, both of these are DC wirings and an AC wiring is not provided on door 211b. Accordingly, the influence of noise occurring due to the AC wiring does not interfere with the transmission of RFID tag 221, and thus, it is possible to secure accurate and reliable communication performance.

Furthermore, on right side door 211b of refrigerating room 202, on which RFID tag 221 is provided, automatic door opening and closing mechanism 217 is provided. In this way, even if a hand of a user working in the kitchen is wet with water, it is possible to reduce the occurrence of the failure of RFID tag 221 due to the water. That is, since the user only slightly touches door 211b, the amount of water drops attached to the surface of door 211b is extremely small or the water drops do not attach when opening and closing the door. Accordingly, it is possible to prevent, when mobile terminal 222 is close to RFID tag 221, the water drops attached to the surface of door 211b from being attached to RFID tag 221 itself or mobile terminal 222 which is close to RFID tag 221, and then wetting or contaminating RFID tag 221 or mobile terminal 222, and thus, it is possible to reduce the failure such as the deterioration of the communication state and the decrease of the component reliability.

Furthermore, RFID tag 221 is disposed at a position separated from handle portions 216 respectively provided on a plurality of doors 211 to 215 and a position higher than handle portion 216. In this way, when opening doors 211 to 215 with the wet hand, even though water drops may be attached to handle portion 216 and the water drops attached to handle portion 216 may spread to the right and left side or drop down, the water drops do not reach the position where RFID tag 221 is disposed. Accordingly, as described before, even if mobile terminal 222 is brought to be close to RFID tag 221, it is possible to prevent RFID tag 221 itself or mobile terminal 222 which is close to RFID tag 221 from becoming wet or contaminated by the water drops attached to the surface of handle portion 216 of doors 211 to 215, and thus, it is possible to reduce the failure such as the deterioration of the communication state and the decrease of the component reliability.

Here, another configuration of refrigerator 300 in the present embodiment will be described.

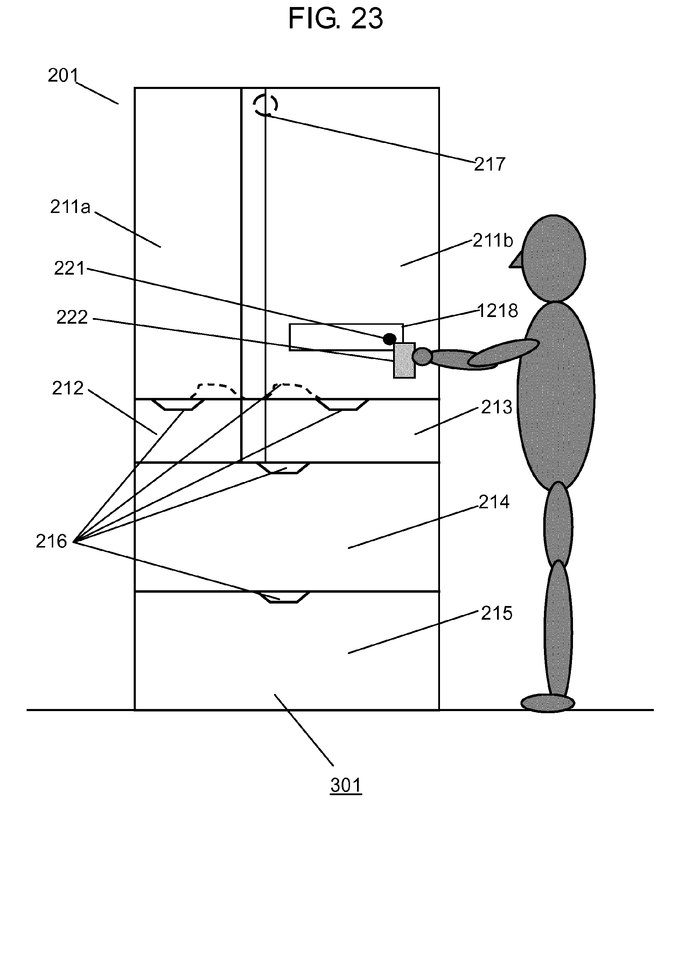

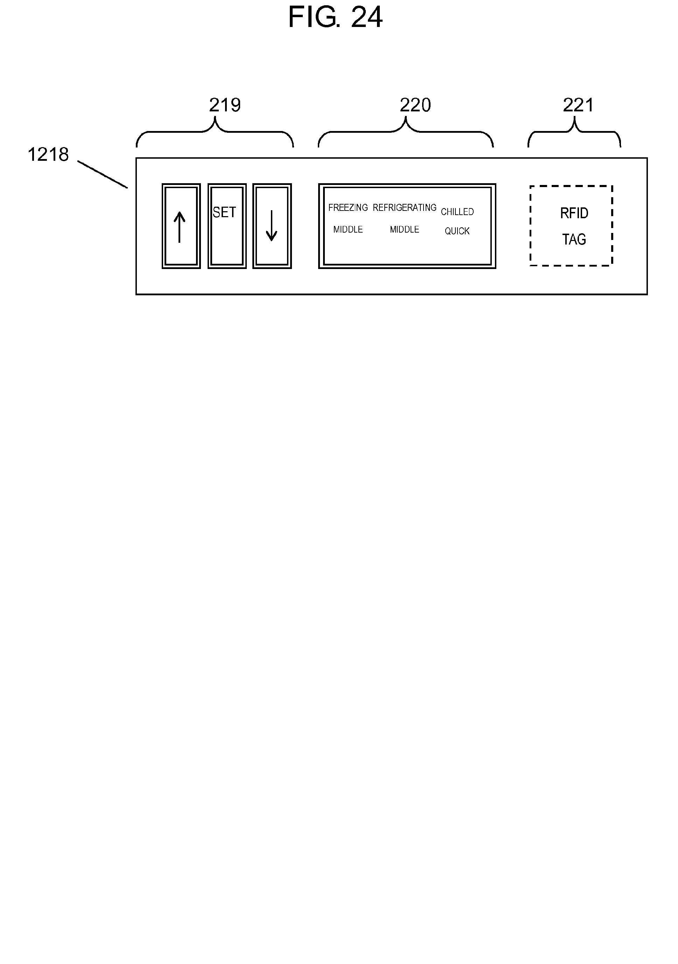

Fig. 23 is a sectional view illustrating another example of a schematic configuration of refrigerator 301 in the third embodiment of the present invention seen from the top. In addition, Fig. 24 is a diagram illustrating a configuration of operation unit 1218 of same refrigerator 301.

In refrigerator 301 in Fig. 23, operation unit 1218 is laterally (horizontally) disposed. In this case, RFID tag 221 is disposed at the right side of at least any of setting status display unit 220 and setting switch 219 of operation unit 1218. In the example in Fig. 24, setting status display unit 220 is disposed between RFID tag 221 and setting switch 219 which is a touch type switch.

In this configuration, similarly to refrigerator 300, the usability and the safety in security can be improved, and at least one of setting status display unit 220 and setting switch 219 is positioned at the left side of RFID tag 221. In this way, it is possible to suppress the problem that, when a right-handed user causes mobile terminal 222 to approach or to be operated to touch RFID tag 221, at least any of setting status display unit 220 and setting switch 219 is in the blind spot of the hand and mobile terminal 222, and thus, the display cannot be seen, or touch setting switch 219 and setting switch 219 erroneously operates. Thus, the usability can be improved.

In the example in Fig. 24, RFID tag 221 is provided on the rightmost portion of operation unit 1218, and is provided on the right side of setting status display unit 220 and setting switch 219. In this way, it is possible to certainly prevent both of setting status display unit 220 and setting switch 219 from being in the blind spot, and thus, the usability is improved.

Furthermore, in a case where setting switch 219 of operation unit 1218 is an electrostatic type touch switch, there is a risk of erroneous operation due to electric discharge occurring due to static electricity. However, since the setting status display unit 220 is disposed between setting switch 219 and RFID tag 221, electric discharge can be prevented from jumping to setting switch 219 from mobile terminal 222 or the user's hand holding mobile terminal 222, and thus, it is possible to prevent the erroneous operation due to the electric discharge.

As described above, according to refrigerator 300 and 301 described in the present embodiment, the usability and the safety can be improved. However, refrigerators 300 and 301 described in the present embodiment are some aspects for realizing the present invention, and various modifications can be made within the objective scope of the present invention.

For example, in the present embodiment described above, the data provided to the user are both of the frequency of the door opening and closing and the accumulated door opening time for the power saving education. However, the data may be any one of the above. In addition, any other data may be provided.

In addition, RFID tag 221 is described as having only a transmission function. However, using RFID tag 221 having a receiving function, for example, an application can be adopted, in which set temperature data may be transmitted from mobile terminal 222 side to RFID tag 221 such that the temperature in the refrigerator at refrigerators 300 and 301 sides can be set, or the frequency of the door opening and closing data and the accumulated door opening time data from the control unit of refrigerators 300 and 301 may be received via short distance communication rather than via the wiring.

Furthermore, in a case where RFID tag 221 has the transmission and receiving function, by providing the transmission and receiving unit at the refrigerator body 201 side also corresponding to RFID tag 221 provided on the door, when the door is opened, RFID tag 221 at refrigerator body 201 side may detect the opening, that is, RFID tag 221 on the door may also serve as door opening and closing detection unit 225. In this way, it is possible to simplify the configuration. While it is preferable that door opening and closing detection unit 225 be also provided corresponding to all the doors, door opening and closing detection unit 225 may however be provided on a proportion of doors, for example, one or two doors of which the frequency of opening and closing is high.

Furthermore, even though it is not described in the present embodiment, the frequency of the door opening and closing and the accumulated door opening and closing time can be checked by a personal computer at the outside of the home, for example, at the company using the internet line via second communication unit 234 of mobile terminal 222. According to this configuration, it is possible to notify children or a grandfather at home to pay attention to reducing the frequency of opening and closing the door of refrigerators 300 and 301.

Regarding the communication method, as long as the information can be transmitted or received with the target being limited by the operation of touching or holding the product, other short distance communication methods can be used.

### INDUSTRIAL APPLICABILITY

As described above, according to the present invention, a refrigerator of which the usability and the security safety are high and a home appliance service system using the refrigerator can be provided, and can be deployed in a wide range of home and business uses. Thus, it is useful.

### REFERENCE MARKS IN THE DRAWINGS

1, 101, 201 refrigerator body
1a, 101a, 201a outer box
1b, 101b, 201b inner box
1c, 101c, 201c rigid polyurethane foam
1d, 101d, 201d vacuum heat insulating material
2, 102, 202 refrigerating room
3, 103, 203 ice making room
4, 104, 204 temperature switching room
5, 105, 205 freezing room
6, 106, 206 vegetable room
7, 107, 207 machine room
8, 108, 208 compressor
9, 109, 209 cooler
10, 110, 201 cooling fan
11, 11a, 11b, 12 to 15, 111, 111a, 111b, 112 to 115, 211, 211a, 211b, 212 to 215, 1111, 1112 door
16, 116, 216 handle portion
17, 117, 217 automatic door opening and closing mechanism
18, 118, 218, 1118, 1218 operation unit
19, 119, 219 setting switch
20, 120, 220 setting status display unit
21, 121, 221 RFID tag
22, 122, 222 mobile terminal
25, 125, 225 door opening and closing detection unit
26, 126, 226 counting unit
27, 127, 227 frequency storage unit
28, 128, 228 timer unit
29, 129, 229 time storage unit
30, 33, 34a, 130, 133, 134a, 230, 233, 234 antenna
31, 131, 231 data request detection unit
32, 132, 232 first communication unit
34, 134, 234 second communication unit
35, 135, 235 first communication control unit
36, 136, 236 second communication control unit
37, 137, 237 display control unit
38, 138, 238 control unit
39, 139, 239 display unit
40, 140, 240 operation unit
41, 141, 241 storage unit
100, 200, 300, 301, 1201, 1202 refrigerator
500 home appliance service system

## Claims

1. A refrigerator comprising:
a refrigerator body having a plurality of storage rooms;
a plurality of doors that open and close the plurality of storage rooms; and
an RFID tag that performs proximity communication,
wherein the RFID tag is provided on an uppermost door among the plurality of doors.

2. The refrigerator of Claim 1,
wherein, among the plurality of doors, the RFID tag is provided on a door that opens and closes a refrigerating room.

3. The refrigerator of Claim 1 or 2,
wherein, among the plurality of doors, at least one door is a pair of double-door type doors, and
wherein, among the pair of doors, the RFID tag is provided on a right side door.

4. The refrigerator of Claim 1 or 2,
wherein, among the plurality of doors, at least one door is a pair of double-door type doors, and
wherein, among the pair of doors, the RFID tag is provided on a left side door.

5. The refrigerator of Claim 3 or 4,
wherein, among the pair of doors, the door on which the RFID tag is provided has a larger size than an other door.

6. The refrigerator of any one of Claims 1 to 5,
wherein, among the pair of doors, only a DC wiring is disposed on the door on which the RFID tag is provided, without an AC wiring.

7. The refrigerator of any one of Claims 1 to 6,
wherein the RFID tag is provided on an end portion of the door on which the RFID tag is provided.

8. The refrigerator of any one of Claims 1 to 7,
wherein the door on which the RFID tag is provided includes an automatic door opening and closing mechanism.

9. The refrigerator of any one of Claims 1 to 8,
wherein each of the plurality of doors includes a handle portion to open the plurality of doors, and
wherein the RFID tag is disposed separated from the handle portion, and the RFID tag is disposed at a position higher than the handle portion.

10. A home appliance service system comprising:
a refrigerator disclosed in any one of Claims 1 to 9; and
a mobile terminal that includes a function of communication with the RFID tag,
wherein, bidirectional information communication is performed between the refrigerator and the mobile terminal by an operation of the mobile terminal touching the refrigerator.
